(19) **Europäisches Patentamt European Patent Office Office européen des brevets**

(11) **EP 3 898 786 B1**

(12) **FASCICULE DE BREVET EUROPEEN**

(45) Date de publication et mention de la délivrance du brevet:
**23.07.2025 Bulletin 2025/30**

(21) Numéro de dépôt: **19845597.4**

(22) Date de dépôt: **17.12.2019**

(51) Classification Internationale des Brevets (IPC):
**C08J 5/04** *(2006.01)*

(52) Classification Coopérative des Brevets (CPC):
**C08J 5/043;** C08J 2377/00; C08J 2377/10

(86) Numéro de dépôt international:
**PCT/FR2019/053112**

(87) Numéro de publication internationale:
**WO 2020/128296 (25.06.2020 Gazette 2020/26)**

(54) **MATERIAU FIBREUX IMPREGNE DE POLYMERE THERMOPLASTIQUE DE MASSE MOLECULAIRE ET DE VISCOSITE OPTIMUM ET SON PROCEDE DE PREPARATION**

FIBROUS MATERIAL IMPREGNATED WITH THERMOPLASTIC POLYMER HAVING OPTIMAL MOLECULAR WEIGHT AND VISCOSITY, AND PROCESS FOR ITS PREPARATION

FASERIGES MATERIAL, IMPRÄGNIERT MIT THERMOPLASTICHEM POLYMER MIT OPTIMALER MOLMASSE UND VISKOSITÄT, UND VERFAHREN ZU SEINER HERSTELLUNG

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2018 FR 1873604**

(43) Date de publication de la demande:
**27.10.2021 Bulletin 2021/43**

(73) Titulaire: **ARKEMA FRANCE**
**92800 Puteaux (FR)**

(72) Inventeurs:
• **HOCHSTETTER, Gilles**
  **92705 COLOMBES CEDEX (FR)**
• **DEVES, Lise**
  **27470 SERQUIGNY (FR)**
• **CAPELOT, Mathieu**
  **27470 SERQUIGNY (FR)**
• **BRIFFAUD, Thierry**
  **27470 SERQUIGNY (FR)**
• **DEYRAIL, Yves**
  **27470 SERQUIGNY (FR)**

(74) Mandataire: **Arkema Patent**
**Arkema France**
**DRD-DPI**
**51, Esplanade du Général de Gaulle**
**CS 10478**
**92907 Paris La Défense Cedex (FR)**

(56) Documents cités:
WO-A1-2016/062896      WO-A1-2018/011493
WO-A1-2018/115737      US-A1- 2014 005 331

• **ANONYMOUS: "GLASS TRANSITION TEMPERATURES", POLYMER PROPERTIES DATABASE, 1 January 2015 (2015-01-01), XP055626574, Retrieved from the Internet <URL:http://polymerdatabase.com/polymer% 20physics/Polymer%20Tg.html> [retrieved on 20190926]**
• **MAYER C ET AL: "Macro- and micro-impregnation phenomena in continuous manufacturing of fabric reinforced thermoplastic composites", COMPOSITES, IPC BUSINESS PRESS LTD. HAYWARDS HEATH, GB, vol. 29, no. 7, 1 July 1998 (1998-07-01), pages 783 - 793, XP004131453, ISSN: 0010-4361, DOI: 10.1016/ S1359-835X(98)00056-6**

EP 3 898 786 B1

## Description

Domaine technique

La présente invention concerne un matériau fibreux imprégné par une matrice de polymère thermoplastique amorphe ou semi-cristallin dont la température de transition vitreuse est telle que $Tg \geq 40°C$, notamment $Tg \geq 100°C$, en particulier $\geq 120°C$, ledit matériau fibreux imprégné présentant un taux de fibres compris de 45 à 65 % en volume, de préférence de 50 à 60% en volume, notamment de 54 à 60% en volume, la masse moléculaire moyenne en nombre Mn dudit polymère thermoplastique étant comprise de 11000 à 25000 g/mol, la viscosité à l'état fondu dudit polymère thermoplastique étant comprise de 80 à 1500 Pa.s, telle que mesurée en rhéologie plan-plan sous 1 Hz et 2% de déformation, à une température de Tg + 220°C.

Plus particulièrement, l'invention vise à proposer un matériau fibreux imprégné tel que défini ci-dessus et dont l'indice de poly-molécularité Ip dudit polymère thermoplastique est compris de 2 à 6, en particulier, 2 à 3,5, notamment de 2,5 à 3,5.

L'invention se rapporte également au procédé de préparation dudit matériau fibreux et à son utilisation pour la fabrication de pièces composites en particulier par dépose automatique au moyen d'un robot ou en procédé d'enroulement filamentaire.

Dans la présente description, on entend par « matériau fibreux » un assemblage de fibres unitaires de renfort. Après imprégnation par la résine, il se présente sous forme de ruban (tape) ou d'une nappe ou d'une plaque pultrudée.

On entend par ruban (ou tape), un feuillard qui est un semi produit de faible épaisseur, non calibré en largeur et en épaisseur, et composé d'une seule mèche de fibres, ou une bande mince composée d'une ou plusieurs mèches de fibres, calibrée en épaisseur et en largeur.

Ce matériau fibreux peut également être seulement pré-imprégnés par la résine conduisant à un semi-produit flexible généralement sous forme de tissus ou de ncf qui seront assemblés et consolidées pour faire une plaque composite thermoformable ou directement positionnés dans un moule pour faire la pièce finale.

De tels matériaux fibreux pré-imprégnés ou imprégnés sont notamment destinés à la réalisation de matériaux composites légers pour la fabrication de pièces mécaniques ayant une structure à trois dimensions et possédant de bonnes propriétés mécaniques et thermiques. Lorsque les fibres sont en carbone et/ou que la résine est chargée d'additifs adaptés, ces matériaux fibreux sont capables d'évacuer des charges électrostatiques. L'utilisation de résines ignifuges ou d'additifs ignifuges dans des résines qui ne le sont pas, permettent aux matériaux fibreux imprégnés d'être résistants au feu. Ils possèdent donc des propriétés compatibles avec la fabrication de pièces notamment dans les domaines de la mécanique, de l'aéronautique, du nautique, de l'automobile, du pétrole et du gaz, en particulier l'offshore, du stockage de gaz, de l'énergie, de la santé et du médical, des sports et loisirs et de l'électronique.

De tels matériaux fibreux imprégnés sont également appelés matériaux composites. Ils comprennent le matériau fibreux, constitué des fibres de renfort, et d'une matrice constituée par le polymère imprégnant les fibres. Le premier rôle de cette matrice est de maintenir les fibres de renfort dans une forme compacte et de donner la forme voulue au produit final. Cette matrice assure également le transfert de charge entre les fibres et donc, conditionne la résistance mécanique du composite. Une telle matrice sert également à protéger les fibres de renfort contre l'abrasion et un environnement agressif, à contrôler l'aspect de surface et à disperser d'éventuelles charges entre les fibres. Le rôle de cette matrice est important pour la tenue à long terme du matériau composite, notamment en ce qui concerne la fatigue et le fluage.

Etat de la technique

Une bonne qualité des pièces composites tridimensionnelles fabriquées à partir de matériaux fibreux imprégnés passe notamment par une maîtrise du procédé de pré-imprégnation ou d'imprégnation des fibres de renfort par le polymère thermoplastique et donc du matériau fibreux imprégné final obtenu.

Les inconvénients de l'état de l'art consistent en la difficulté d'obtenir une bonne imprégnation des fibres, tout en ayant de bonnes propriétés mécaniques. Un tel compromis est difficile à obtenir, car pour avoir de bonnes propriétés mécaniques, la masse molaire doit être élevée, ce qui implique une grande viscosité.

Ainsi, la masse molaire influe sur la valeur de la Tg de la résine et la Tg augmente avec la masse molaire, jusqu'à atteindre un régime plateau dans lequel la Tg ne varie plus significativement. La Tg influe au 1er ordre sur les propriétés mécaniques de la résine, notamment son module et la stabilité en température de ce module : il est d'usage de n'utiliser le composite que jusqu'à une température maximum égale à Tg -10 à -30°C.

Lorsque la masse molaire augmente, la résistance à la rupture du composite augmente également mais la viscosité à l'état fondu de la résine augmente et rend plus difficile l'imprégnation de fibres, puis la consolidation finale de la pièce composite, puisqu'à cette étape, des mouvements de fibres et de résine sont nécessaires pour combler les porosités, notamment entre bande et intertapes.

Ce problème est encore accru lorsque la Tg du polymère est élevée puisque la viscosité dépend de l'écart entre la température de mise en œuvre et la Tg du polymère.

Jusqu'à présent, la fabrication de rubans de matériaux fibreux renforcés par imprégnation de polymère thermoplastique ou de polymère thermodurcissable s'effectuait suivant plusieurs procédés qui dépendent notamment de la nature du polymère, du type de matériau composite final souhaité et de son domaine d'applications, certains de ces procédés étant constitués d'une étape d'imprégnation suivie d'une étape de calandrage à chaud du matériau fibreux imprégné ou d'une étape de séchage éventuellement suivie d'une étape de fusion du polymère thermoplastique.

Ainsi les technologies d'imprégnation en voie humide ou au moyen d'un précurseur liquide ou de très faible viscosité, polymérisant in situ, sont souvent utilisées pour imprégner les fibres de renfort par des polymères thermodurcissables, comme les résines époxy par exemple, tel que décrit dans le brevet WO2012/066241A2. Ces technologies ne sont généralement pas applicables directement à l'imprégnation par des polymères thermoplastiques, car ceux-ci disposent rarement de précurseurs liquides.

Les techniques actuelles d'imprégnation de matériaux fibreux et de mise en forme de tels matériaux fibreux imprégnés sous forme de rubans calibrés présentent donc plusieurs inconvénients. Il est par exemple difficile de chauffer de manière homogène un mélange fondu de polymères thermoplastiques dans une filière et en sortie de filière, jusqu'au cœur du matériau, ce qui altère la qualité de l'imprégnation. De plus, la différence de température existante entre les fibres et un mélange fondu de polymères dans un four, notamment infrarouge, altère également la qualité et l'homogénéité de l'imprégnation. En outre, ce mode d'imprégnation par voie fondue ne permet pas l'obtention de fort taux de fibres ou de grandes vitesses de production à cause de la grande viscosité des résines thermoplastiques, notamment lorsqu'elles présentent des températures de transition vitreuse élevées, ce qui est nécessaire à l'obtention de matériaux composites de haute performance.

En particulier, les procédés d'imprégnation par extrusion en tête d'équerre d'un polymère fondu sont adaptés à l'utilisation des polymères thermoplastiques de faible viscosité uniquement. Les polymères thermoplastiques, en particulier ceux à haute température de transition vitreuse ont donc une viscosité à l'état fondu trop importante pour permettre une imprégnation satisfaisante des fibres et des produits semi-finis ou finis de bonne qualité.

Il est alors nécessaire dans ce cas d'utiliser des prépolymères, qu'ils soient réactifs sur eux-mêmes ou réactifs entre eux, ou un prépolymère et un allongeur de chaîne, pour effectuer la pré-imprégnation avec un produit fluide, facile à imprégner, puis de chauffer ensuite le produit pré-imprégné afin de finaliser l'imprégnation.

Cependant, l'utilisation de prépolymères présente d'autres inconvénients, et notamment les prépolymères doivent présenter une cinétique assez lente pour permettre l'imprégnation mais également une cinétique assez rapide pour permettre une fabrication compatible avec une cadence industrielle. Ce qui nécessite un compromis parfois difficile à atteindre.

Présentation de l'invention

L'invention a donc pour but de remédier à au moins un des inconvénients de l'art antérieur et notamment a pour but l'obtention d'un matériau fibreux imprégné tel que ci-dessus défini avec une matrice polymère thermoplastique dont les trois paramètres viscosité à l'état fondu, température de mise en œuvre et masse moléculaire moyenne en poids sont choisis de façon optimum de manière à permettre l'emploi d'un polymère thermoplastique non réactif et non pas d'un polymère issu de précurseurs réactifs (prépolymères ou monomères), permettant ainsi d'éviter les inconvénients présentés par lesdits prépolymères ou monomères.

Description des modes de réalisation

A cet effet, l'invention a pour objet un matériau fibreux imprégné comprenant au moins un matériau fibreux en fibres continues se présentant sous forme d'une mèche ou de plusieurs mèches parallèles et au moins une matrice de polymère thermoplastique, caractérisé en ce que ledit au moins polymère thermoplastique est un polymère amorphe ou semi-cristallin dont la température de transition vitreuse est telle que Tg ≥ 40°C, notamment Tg ≥ 100°C, en particulier ≥ 120°C, le taux de fibres dans ledit matériau fibreux imprégné étant compris de 45 à 65 % en volume, de préférence de 50 à 60% en volume, notamment de 54 à 60% en volume, la masse moléculaire moyenne en nombre Mn dudit polymère thermoplastique étant comprise de 11000 à 25000 g/mol, la viscosité à l'état fondu dudit polymère thermoplastique étant comprise de 80 à 1500 Pa.s, telle que mesurée en rhéologie plan-plan sous 1 Hz et 2% de déformation, à une température de Tg + 220°C.

La température de transition vitreuse Tg de la matrice polymère thermoplastique est mesurée à l'aide d'un calorimètre différentiel à balayage (DSC), après un deuxième passage en chauffe, suivant la norme ISO 11357-2:2013. La vitesse de chauffage et de refroidissement est de 20°C/min.

Les Inventeurs ont donc trouvé qu'un polymère thermoplastique non réactif qui présente une viscosité à l'état fondu particulière à la température de mise en œuvre dudit polymère matériau fibreux et une masse moléculaire moyenne en poids permettait d'imprégner un matériau fibreux sans nécessité de passer par l'emploi d'un polymère issu de précurseurs réactifs (prépolymères ou monomères) conduisant ainsi à l'obtention d'un matériau fibreux imprégné présentant un excellent compromis entre la qualité d'imprégnation, la compatibilité avec les techniques de consolidation hors autoclave et les propriétés mécaniques.

En d'autres termes, les Inventeurs ont trouvés que pour avoir une bonne imprégnation d'un matériau fibreux il était nécessaire de se placer à une température de transition vitreuse Tg + 220°C, ce qui permet d'obtenir une température de transformation ou de mise en œuvre adéquate pour avoir non seulement une bonne viscosité à l'état fondu mais aussi une masse moléculaire moyenne en poids suffisante pour garantir de bonnes propriétés mécaniques.

Dans un premier temps, les différentes proportions en monomères constitutifs du polymère sont choisies pour atteindre une masse molaire moyenne en poids d'au moins 11000 g/mol et moins de 25000 g/mol avec par exemple l'utilisation de limiteurs de chaine qui permet le contrôle de la masse moléculaire du polymère, ce qui permet d'obtenir un polymère qui après imprégnation d'un matériau fibreux permettra d'obtenir un composite présentant de bonnes propriétés mécaniques sans pour autant perturber l'imprégnation dudit matériau fibreux à la température de transformation ou de mise en œuvre à Tg + 220°C en raison de la viscosité à l'état fondu obtenue à cette température comprise de 80 à 1500 Pa.s.

Ainsi, si l'on se place à une température de transformation ou de mise en œuvre égale à Tg + 150°C, la viscosité à l'état fondu à cette température sera moins fluide, comparée à celle obtenue à une température Tg + 220°C. Néanmoins, même si la viscosité à l'état fondu est dans la gamme revendiquée de 80 à 1500 Pa.s, la masse moléculaire moyenne en nombre obtenue sera alors inférieure à la masse moléculaire moyenne en nombre critique qui doit être comprise de 11000 à 25000 g/mol et l'imprégnation ne sera pas correcte.

A contrario, à Tg au-delà de Tg + 220°C, il y a alors risque de dégradation du produit à cette température et par conséquent le produit obtenu présentera des propriétés mécanique non satisfaisante malgré un masse moléculaire correcte et une bonne viscosité.

Il s'agit donc bien d'un compromis à trois facteurs, la température de transformation ou de mise en œuvre, soit Tg + 220°C, la viscosité, soit 80 à 1500 Pa.s et la masse moléculaire moyenne en nombre critique qui doit être comprise de 11000 à 25000 g/mol.

L'expression « polymère thermoplastique non réactif » signifie que le polymère thermoplastique présente un poids moléculaire qui n'est plus susceptible d'évoluer significativement, c'est-à-dire que sa masse moléculaire moyenne en nombre (Mn) évolue de moins de 20% lors de sa mise en œuvre et correspondant donc au polymère polyamide final de la matrice thermoplastique.

La masse molaire en nombre (Mn) et en poids (Mw) des polymères a été déterminé par chromatographie d'exclusion stérique selon les normes ISO 16014-1 :2012, 16014-2 :2012 et 16014-3 :2012 en utilisant les conditions suivantes :

Appareil : Waters Alliance 2695 instrument
Solvant: hexafluoroisopropanol stabilisé avec 0.05M de trifluoroacetate de potassium
Débit: 1 ml/minute
Température des colonnes: 40°C.
Deux colonnes en série : 1000 Å PFG and 100 Å PFG (PPS)
Concentration des échantillons: 1 g/L (dissolution à température ambiante pendant 24 h)
Filtration des échantillons à l'aide d'une seringue munie d'un filtre ACRODISC PTFE diamètre 25mm porosité 0,2 $\mu$m
Volume d'injection : 100$\mu$l
Détection réfractométrique à 40°C avec détection UV à 228 nm

Calibration par des standards PMMA de 1 900 000 to 402 g.mol-1. Courbe d'étalonnage modélisée par un polynôme du cinquième degré.

La viscosité à l'état fondu est mesurée par rhéologie oscillatoire à une température Tg +220°C, sur un appareil Physica MCR301 entre deux plans parallèles de 25 mm de diamètre. La mesure de la viscosité est effectuée sur un temps maximum de dix minutes.

Il est bien évident que le polymère thermoplastique non réactif doit être stable à la température de mesure de la viscosité à l'état fondu.

Au cas où ledit polymère thermoplastique ne serait pas stable à cette température, il est alors nécessaire de stabiliser les polymères, en particulier par un antioxydant ou un mélange d'antioxydants en proportion en poids par rapport au polymère thermoplastique de 0,1 à 4%, en particulier de 0,1 à 1%.

Avantageusement, l'antioxydant est choisi parmi des phénols encombrés, tels que l'Irganox® (BASF) ou le BHT (hydroxytoluène butylé), des amines aromatiques secondaires telles que des diphénylamines alkylées, des phosphites tels que le Tris(2,4-di-tert-butylphenyl)phosphite ou l'Irgafos® (CIBA).

Avantageusement, l'écart entre la température de fusion Tf dudit au moins polymère thermoplastique semi-cristallin et sa Tg est inférieure ou égale à 200°C (Tf - Tg ≤ 200°C).

Dans un mode de réalisation, l'indice de poly-molécularité Ip dudit polymère thermoplastique est compris de 2 à 6, en particulier de 2 à 3,5, notamment de 2,5 à 3,5.

L'indice de polymolécularité, noté Ip est mesuré par chromatographie d'exclusion stérique ou de perméation de gel (en langue anglaise : Gel Permeation Chromatography) et correspond au rapport Mw/Mn.

L'indice de polymolécularité donne une première idée de la distribution des masses molaires des différentes macromolécules au sein du polymère. Pour un polymère parfait, dans lequel toutes les macromolécules seraient linéaires, auraient une même longueur, et par conséquent une même masse molaire, l'indice de polymolécularité Ip serait égal à 1. Pour un polyamide obtenu par polycondensation à partir, entre autres monomères, de diamines et de diacides carboxyliques, l'indice de polymolécularité attendu est de 2,0.

Un indice de polymolécularité supérieur à 2 peut être dû à la présence de ramifications ou branchements sur la chaîne principale du polymère. Dans le cas des copolyamides, elles peuvent apparaître sur l'atome d'azote de la fonction amide. Ainsi, elles peuvent être quantifiées par RMN (Résonance Magnétique Nucléaire) en comparant le taux d'amide aromatique tertiaire (ramifié) au taux d'amide aromatique secondaire (linéaire).

La présence de branchements va impacter la viscosité de la résine. Plus les branchements seront nombreux et plus la viscosité sera importante conduisant ainsi à une mauvaise imprégnation.

Il peut donc s'avérer nécessaire de contrôler le taux de branchements du polymère thermoplastique utilisé.

Dans toute la description, on utilise le terme « pré-imprégnation ou pré-imprégné » pour désigner un matériau fibreux sur lequel le polymère thermoplastique est déposée avant fusion dudit polymère sur le matériau fibreux et le terme « imprégnation ou imprégné » pour désigner un matériau fibreux sur lequel la fusion dudit polymère thermoplastique a été effectuée, notamment par un système de chauffage, ou un matériau fibreux pour lequel l'imprégnation a été finalisée.

## Matrice polymère thermoplastique

Ledit au moins polymère thermoplastique est un polymère amorphe ou semi-cristallin dont la température de transition vitreuse est telle que Tg ≥ 40°C, notamment Tg ≥ 100°C, en particulier ≥ 120°C.

La masse moléculaire moyenne en nombre Mn dudit polymère thermoplastique est comprise de 11000 à 25000 g/mol, la viscosité à l'état fondu dudit polymère thermoplastique étant comprise de 80 à 1500 Pa.s, telle que mesurée en rhéologie plan-plan sous 1 Hz et 2% de déformation, à une température de Tg + 220°C.

On entend par thermoplastique, ou polymère thermoplastique, un matériau généralement solide à température ambiante, pouvant être semi-cristallin ou amorphe, et qui se ramollit lors d'une augmentation de température, en particulier après passage de sa température de transition vitreuse (Tg) et s'écoule à plus haute température lorsqu'il est amorphe, ou pouvant présenter une fusion franche au passage de sa température dite de fusion (Tf) lorsqu'il est semi-cristallin, et qui redevient solide lors d'une diminution de température en dessous de sa température de cristallisation (pour un semi-cristallin) et en dessous de sa température de transition vitreuse (pour un amorphe).

La Tg et la Tf sont déterminées par analyse calorimétrique différentielle (DSC) selon la norme 11357-2 :2013 et 11357-3 :2013 respectivement.

Concernant le polymère de constitution de la matrice d'imprégnation du matériau fibreux, c'est avantageusement un polymère thermoplastique ou un mélange de polymères thermoplastiques.

Ce polymère ou mélange de polymères thermoplastiques peut être broyé sous forme de poudre, afin de pouvoir l'utiliser dans un dispositif tel qu'une cuve, notamment en lit fluidisé ou en dispersion aqueuse.

Le dispositif sous forme de cuve, notamment en lit fluidisé peut être ouvert ou fermé.

Les polymères thermoplastiques entrant dans la constitution de la matrice d'imprégnation du matériau fibreux, peuvent être choisis parmi :

- les polymères et copolymères de la famille des polyamides (PA) aliphatiques, cycloaliphatiques ou des PA semi-aromatiques (encore dénommés polyphtalamides (PPA)),
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des poly(aryléthercétones) (PAEK) comme le poly(étheréthercétone) (PEEK), ou les poly(aryléthercétonescétones) (PAEKK) comme le poly(éthercétonecétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines;
- l'acide polylactique (PLA),
- l'alcool polyvinylique (PVA),

- les polymères fluorés, en particulier le polytétrafluoroéthylène (PTFE) ou le polychlorotrifluoroéthylène (PCTFE),

et leurs mélanges.

Avantageusement, les prépolymères de constitution de la matrice sont choisis parmi les Polyamides (PA), en particulier choisis parmi les polyamides aliphatiques, les polyamides cycloaliphatiques, et les polyamides semi-aromatiques (polyphthalamides) éventuellement modifiés par des motifs urées, et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le Poly(éthercétonecétone) (PEKK), le Poly(étheréthercétone) (PEEK),.

Pour des pièces de structure devant résister à des températures élevées, outre les polymères fluorés, on utilise avantageusement selon l'invention les PAEK (PolyArylEtherKetone) tels que les poly(éther cétones) PEK, le poly(éther éther cétone) PEEK, le poly(éther cétone cétone) PEKK, le Poly(éther cétone éther cétone cétone) PEKEKK ou les PA de haute température de transition vitreuse Tg).

Avantageusement, lorsque ledit polymère est un mélange de deux polymères P1 et P2, la proportion en poids de polymère P1 et P2 est comprise de 1-99% à 99-1%.

Avantageusement, lorsque ledit polymère thermoplastique est un mélange, et que le procédé de pré-imprégnation utilise une poudre sèche, ce mélange se présente sous forme d'une poudre obtenue soit par « dry blend » avant introduction dans la cuve de pré-imprégnation ou par « dry blend » réalisé directement dans la cuve ou encore, par broyage d'un compound réalisé au préalable en extrudeuse.

Dans une première variante, la masse moléculaire moyenne en nombre Mn dudit polymère thermoplastique est comprise de 14000 à 25000 et de préférence 15000 à 21000 et la viscosité à l'état fondu dudit polymère thermoplastique est comprise de 150 à 1500 Pa.s et de préférence de 200 à 750 Pa.s à une température de Tg + 220 °C et ledit polymère thermoplastique est un polymère de Tg $\geq$130°C.

Le polymère thermoplastique peut donc être n'importe quel polymère thermoplastique défini ci-dessus à partir du moment où la Tg $\geq$130°C.

De manière facultative, le polymère thermoplastique ou mélange de polymères thermoplastiques comprend en outre des charges carbonées, en particulier du noir de carbone ou des nanocharges carbonées, de préférence choisies parmi des graphènes, des nanotubes de carbone, des nanofibrilles de carbone ou leurs mélanges. Ces charges permettent de conduire l'électricité et/ou la chaleur, et permettent par conséquent de faciliter la fusion de la matrice polymère lorsqu'elle est chauffée.

Optionnellement, ledit polymère thermoplastique comprend au moins un additif, notamment choisi parmi un catalyseur, un antioxydant, un stabilisant thermique, un stabilisant UV, un stabilisant à la lumière, un lubrifiant, une charge, un plastifiant, un agent ignifugeant, un agent nucléant, un allongeur de chaîne et un colorant, un agent conducteur électrique, un agent conducteur thermique ou un mélange de ceux-ci.

Avantageusement, ledit additif est choisi parmi un stabilisant thermique, un antioxydant, un agent ignifugeant, un agent conducteur électrique et un agent conducteur thermique.

Le polymère thermoplastique ou mélange de polymères thermoplastiques peut en outre comprendre des polymères à cristaux liquides ou du poly(butylène téréphtalate) cyclisé, ou des mélanges en contenant, comme la résine CBT100 commercialisée par la société CYCLICS CORPORATION. Ces composés permettent notamment de fluidifier la matrice polymère à l'état fondu, pour une meilleure pénétration au cœur des fibres. Selon la nature du polymère, ou mélange de polymères thermoplastiques, utilisé pour réaliser la matrice d'imprégnation, notamment sa température de fusion, on choisira l'un ou l'autre de ces composés.

Avantageusement, ledit au moins un polymère thermoplastique est choisi parmi les polyamides, le PEKK, le PEI et un mélange de PEKK et de PEI.

Avantageusement, lorsque ledit polymère est un mélange de deux polymères P1 et P2, ce mélange est composé d'une poudre obtenue par « dry blend », avant l'introduction dans la cuve ou directement dans la cuve, et ce mélange de deux polymères P1 et P2 est un mélange de PEKK et de PEI.

Avantageusement, le mélange PEKK/PEI est compris de 90-10% à 60-40% en poids, en particulier de 90-10% à 70-30% en poids.

Dans cette première variante, ledit polymère thermoplastique peut donc être n'importe quel polymère thermoplastique tel que défini ci-dessus à partir du moment où la Tg $\geq$130°C.

## Matrice polymère thermoplastique polyamide

Dans un mode de réalisation de la première variante ci-dessus définie, ledit au moins un polymère thermoplastique est un polyamide, en particulier stabilisé thermiquement.

Le stabilisant thermique est notamment nécessaire pour les polyamides qui sont susceptibles de se dégrader à la température Tg + 220°C.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Le polyamide peut être un homopolyamide ou un copolyamide ou un mélange de ceux-ci. Dans cette première variante où ledit polymère thermoplastique est un polyamide de Tg ≥130°C, en particulier stabilisé thermiquement, avantageusement, ledit polyamide est un polyamide semi-aromatique.

Pour les polyamides semi-aromatiques, il est éventuellement modifié par des unités urées, et est notamment un polyamide semi-aromatique de formule X/YAr, tel que décrits dans EP1505099, dans laquelle :

Y désigne les restes d'une diamine aliphatique ayant de 8 à 20 atomes de carbone,
Ar désigne les restes d'un diacide carboxylique aromatique,
X désigne soit les restes de l'acide aminoundecanoïque NH2-(CH2)10-COOH, du lactame 12 ou de l'aminoacide correspondant soit le motif Y,x reste de la condensation de la diamine avec un diacide aliphatique (x) ayant entre 8 et 20 atomes de carbone soit encore le motif Y,I reste de la condensation de la diamine avec l'acide isophtalique.

Le polyamide X/YAr est notamment un polyamide semi-aromatique de formule A/XT dans laquelle A est choisi parmi un motif obtenu à partir d'au moins un aminoacide, un motif obtenu à partir d'au moins un lactame et au moins un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques;

X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18.

A/XT est notamment un polyamide de formule A/6T, A/9T, A/10T ou A/11T, A étant tel que défini ci-dessus, en particulier un polyamide PA 6/6T, un PA 66/6T, un PA 6I/6T, un PA MXDT/6T, un PA MPMDT/6T, un PA PA11/10T, un PA 11/6T/10T, un PA MXDT/10T, un PA MPMDT/10T, un PA BACT/10T, un PA BACT/6T, un PA 11/BACT, un PA BACT/10T/6T, un PA 11/BACT/6T, PA 11/MPMDT/6T, un PA 11/BACT/10T, un PA 11/MXDT/10T, un PA 11/MXDT/6T.

Il est bien évident que pour les copolyamides de formule A/XT, la proportion de A et XT est fonction de la Tg qui doit dans ce cas être supérieure ou égale à 130°C.

T correspond à l'acide téréphtalique, MXD correspond à la m-xylylène diamine, MPMD correspond à la méthylpentaméthylène diamine et BAC correspond au bis(aminométhyl)cyclohexane qui peut être aussi bien de la 1,3 BAC que de la 1,4 BAC.

Avantageusement, ledit polyamide est un polyamide semi-aromatique choisi parmi un PA MXDT/6T, un PA MPMDT/6T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, un PA 11/MPMDT/6T, PA 11/ BACT/10T, un PA 11/MXDT/10T, un PA 11/MXDT/6T.

Dans une seconde variante, la masse moléculaire moyenne en nombre Mn dudit polymère thermoplastique est comprise de 11000 à 20000 g/mol et de préférence 12000 à 18000, la viscosité à l'état fondu dudit polymère thermoplastique est comprise de 80 à 650 Pa.s et de préférence 100 à 450 Pa.s à une température de Tg + 220 °C et ledit polymère thermoplastique est un polyamide de Tg < 130°C.

Dans cette seconde variante, le polymère thermoplastique ne peut donc être qu'un polyamide de Tg < 130°C.

Avantageusement, ledit polyamide est choisi parmi les polyamides aliphatiques, les polyamides cycloaliphatiques et les polyamides semi-aromatiques de Tg inférieure à 130°C, préférentiellement les polyamides aliphatiques, les polyamides cycloaliphatiques.

Les polyamides aliphatiques et cycloaliphatiques sont constitués de motifs répétitifs choisis parmi un motif obtenu à partir de la polycondensation d'au moins un aminoacide et un motif obtenu à partir de la polycondensation d'au moins un lactame (pour les polyamides aliphatiques) ou un motif répétitif X.Y obtenu à partir de la polycondensation :

d'au moins une diamine, ladite diamine étant choisie parmi une diamine aliphatique linéaire (ou ramifiée), et une diamine cycloaliphatique
d'au moins un diacide carboxylique, ledit diacide étant choisi parmi un diacide aliphatique et un diacide cycloaliphatique,
ladite diamine et ledit diacide comprenant de 4 à 36 atomes de carbone, avantageusement de 6 à 18 atomes de carbone,
aussi bien pour les polyamides aliphatiques que les polyamides cycloaliphatiques.

Il est bien évident qu'un polyamide cycloaliphatique comprend au moins une diamine cycloaliphatique et/ou un diacide cycloaliphatique dans le motif XY.

Avantageusement, lorsque ledit polymère thermoplastique est un polyamide aliphatique il est choisi parmi :

- le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), le polyamide 11/1010 et le polyamide 12/1010, ou un mélange de ceux-ci ou un copolyamide de ceux-ci, et les copolymères blocs, notamment polyamide/polyéther (PEBA).

Les polyamides semi-aromatiques sont tels que définis ci-dessus à partir du moment où leur Tg est inférieure à 130°C, notamment choisis parmi et les polyamides semi-aromatiques sont choisis parmi MXD10, MXD6, PA 6/6T, un PA 66/6T, un PA 6I/6T, MPMDT/10T, 11/MPMDT/10T, MPMDT/6T, un PA BACT/10T, un PA 11/BACT/10T, un MXDT/10 et un PA 11/MXDT/10T.

**Matériau** fibreux :

Concernant les fibres de constitution dudit matériau fibreux, ce sont notamment des fibres continues d'origine minérale, organique ou végétale sous forme de mèches.

Avantageusement, le nombre de fibres dans ledit matériau fibreux pour des fibres de carbone est supérieur ou égal à 3K, en particulier supérieur ou égal à 6K, notamment supérieur ou égal à 12K.

Avantageusement, le nombre de fibres dans ledit matériau fibreux pour des fibres de carbone est supérieur ou égal à 12K, en particulier choisi parmi 12K, 24K, 48K, 50K et 400K, notamment 12K, 24K, 48K et 50K.

Avantageusement, le grammage pour la fibre de verre est supérieur ou égal à 1200 Tex, notamment supérieur ou égal à 2400 Tex, supérieur ou égal à 4800 Tex.

Le Tex signifie que 1000 m de fil de base pèsent 1 gr.

Parmi les fibres d'origine minérale, on peut citer les fibres de carbone, les fibres de verre, les fibres de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides semi-aromatiques, des fibres d'aramide ou des fibres en polyoléfines par exemple. De préférence, elles sont à base de polymère thermoplastique amorphe et présentent une température de transition vitreuse Tg supérieure à la Tg du polymère ou mélange de polymère thermoplastique de constitution de la matrice d'imprégnation lorsque ce dernier est amorphe, ou supérieure à la Tf du polymère ou mélange de polymère thermoplastique de constitution de la matrice de d'imprégnation lorsque ce dernier est semi-cristallin. Avantageusement, elles sont à base de polymère thermoplastique semi-cristallin et présentent une température de fusion Tf supérieure à la Tg du polymère ou mélange de polymère thermoplastique de constitution de la matrice de d'imprégnation lorsque ce dernier est amorphe, ou supérieure à la Tf du polymère ou mélange de polymère thermoplastique de constitution de la matrice de d'imprégnation lorsque ce dernier est semi-cristallin. Ainsi, il n'y a aucun risque de fusion pour les fibres organiques de constitution du matériau fibreux lors de l'imprégnation par la matrice thermoplastique du composite final. Parmi les fibres d'origine végétale, on peut citer les fibres naturelles à base de lin, de chanvre, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique.

Il peut également correspondre à des fibres avec des fils de maintien.

Ces fibres de constitution peuvent être utilisées seules ou en mélanges. Ainsi, des fibres organiques peuvent être mélangées aux fibres minérales pour être imprégnée de polymère thermoplastique et former le matériau fibreux imprégné.

Les mèches de fibres organiques peuvent avoir plusieurs grammages. Elles peuvent en outre présenter plusieurs géométries.

De préférence le matériau fibreux est constitué par des fibres continues de carbone, de verre, de basalte ou de carbure de silicium ou leur mélange, en particulier des fibres de carbone. Il est utilisé sous forme d'une mèche ou de plusieurs mèches qui constituent alors une monomèche présentant l'addition des fibres de chaque mèche.

Les fibres du matériau fibreux peuvent être ensimées ou non.

Le terme « ensimée » désigne les traitements de surface appliqués aux matériaux fibreux lors de leur fabrication. Il peut aussi désigner un prétraitement fugace en préambule de l'étape de pré-imprégnation, qu'il soit fait directement en ligne avec l'imprégnation ou non. Il peut aussi désigner un prétraitement fugace en préambule de l'étape de pré-imprégnation, qu'il soit fait directement en ligne avec l'imprégnation ou non.

Ils sont généralement de nature organique (type résine thermodurcissable ou thermoplastique) et très souvent formulés pour la pré-imprégnation des fibres de renfort de polymères à bas point de fusion Tf ou thermodurcissables à bas point de Tg.

Ces ensimages sont également utiles pour protéger les fibres sèches d'un endommagement lors d'un contact avec un système de guidage.

Dans le cas d'un matériau non ensimé, ledit matériau fibreux peut comprendre jusqu'à 0,1% en poids d'un matériau de nature organique (type résine thermodurcissable ou thermoplastique) dénommé ensimage.

Dans le cas d'un prétraitement fugace réalisé par l'imprégnateur par exemple en préambule de l'étape la pré-imprégnation des fibres de renfort, l'ensimage peut être un liquide organique comme de l'eau, un alcool à bas ou haut poids moléculaire (éthanol, méthanol, isopropanol par exemple), une cétone (acétone etc...) qui jouera le rôle d'ensimage fugace ; c'est-à-dire qu'il sera présent un court laps de temps en contact avec la fibre pour permettre sa manipulation à l'état « sec » (i.e. avant la pré-imprégnation) et qu'il sera ensuite extrait du matériau composite pour ne pas perturber les caractéristiques finales du composite.

Dans le cas d'un matériau ensimé, ledit matériau fibreux peut comprendre de 0,1% en poids à 2,5% en poids d'un matériau de nature organique (type résine thermodurcissable ou thermoplastique) dénommé ensimage.

Avantageusement, les fibres du matériau fibreux sont non ensimées.

Le terme « non ensimé » signifie que la fibre est soit non ensimée à l'origine et qu'elle n'a donc pas subi de traitement de surface, ou bien que la fibre a été dé-ensimée avant son utilisation.

Avantageusement, le taux de fibres en volume est constant dans au moins 70% du volume matériau fibreux imprégné, notamment dans au moins 80% du volume du matériau fibreux imprégné, en particulier dans au moins 90% du volume du matériau fibreux imprégné, plus particulièrement dans au moins 95% du volume du matériau fibreux imprégné.

Avantageusement, la répartition des fibres est homogène dans au moins 95% du volume du matériau fibreux imprégné.

La mesure du taux de fibres en volume est effectuée localement sur un volume élémentaire représentatif (VER).

Le terme « constant » signifie que le taux de fibres en volume est constant à l'incertitude de mesure près qui est de plus ou moins 1%.

Le terme « homogène » signifie que l'imprégnation est uniforme et qu'il n'y a pas de fibres sèches, c'est-à-dire, non imprégnée, et qu'il n'y a pas à l'inverse de zone de résine pure sans fibre dans au moins 95% du volume du ruban de matériau fibreux imprégné.

Avantageusement, le taux de porosité dans ledit matériau fibreux imprégné est inférieur à 10%, notamment inférieur à 5%, en particulier inférieur à 2%.

Il faut noter qu'un taux de porosité nul est difficilement accessible et que par conséquent, avantageusement le taux de porosité est supérieur à 0% mais inférieur aux taux cités ci-dessus.

Le taux de porosité correspond au taux de porosité fermée et est déterminé comme étant l'écart relatif entre la densité théorique et la densité expérimentale dudit matériau fibreux imprégné tel que décrit dans la partie exemples de la présente invention.

Avantageusement, ledit matériau fibreux imprégné est monocouche.

Le terme « monocouche » signifie que lorsque l'imprégnation du matériau fibreux est effectuée, l'imprégnation s'étant effectuée de manière particulièrement homogène et à cœur, et notamment avec au moins un épanouissement lors de l'imprégnation, ledit matériau fibreux et le polymère sont indissociables l'un de l'autre et forment un matériau constitué d'une seule couche à base de fibres et polymère.

Avantageusement, en l'absence de réchauffage, le matériau fibreux imprégné est non flexible.

Cela signifie que le matériau fibreux imprégné n'est pas capable d'épouser une forme complexe à température ambiante et qu'il ne peut le faire qu'au-delà de la Tf de la résine. En d'autres termes, le matériau fibreux imprégné ne présente pas de drapabilité.

A l'inverse, lorsque le matériaux fibreux est pré-imprégné, il est flexible et peut épouser la forme du moule, au moins dans le cas de formes pas trop complexes.

Les différentes caractéristiques de nombre de fibres, de taux de fibres, d'ensimage, de répartition des fibres, de flexibilité et la caractéristique monocouche sont combinables chacune ou l'une avec une ou plusieurs autres en combinaisons avec celles de l'objet de l'invention et peuvent faire l'objet d'autant de modes de réalisation que de combinaisons possibles qui font partie intégrante de l'invention.

Dans les matériaux imprégnés aussi appelés « prêts à l'emploi », le polymère ou mélange de polymères thermoplastiques d'imprégnation est réparti uniformément et de manière homogène autour des fibres. Dans ce type de matériau, le polymère thermoplastique d'imprégnation doit être réparti de manière la plus homogène possible au sein des fibres afin d'obtenir un minimum de porosités, c'est à dire un minimum de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux imprégné et le fragilisent mécaniquement. Une répartition homogène du polymère ou mélange de polymères améliore donc la tenue mécanique et l'homogénéité du matériau composite formé à partir de ces matériaux fibreux imprégnés.

Ainsi, dans le cas de matériaux imprégnés dits « prêts à l'emploi », le taux de fibres dans ledit matériau fibreux imprégné est compris de 45 à 65 % en volume, de préférence de 50 à 60% en volume, notamment de 54 à 60% en volume.

La mesure du taux d'imprégnation peut être réalisée par analyse d'image (utilisation de microscope ou d'appareil photo ou de caméra numérique, notamment), d'une coupe transversale du ruban, en divisant la surface du ruban imprégné par le polymère par la surface totale du produit (surface imprégnée plus surface des porosités). Afin d'obtenir une image de bonne qualité il est préférable d'enrober le ruban découpé dans son sens transversal dans une résine de polissage standard et de polir avec un protocole standard permettant l'observation de l'échantillon au microscope grossissement fois 6 au minimum.

Selon un autre aspect, la présente invention concerne un procédé de préparation d'un matériau fibreux imprégné tel que défini ci-dessus, caractérisé en ce qu'il comprend une étape de pré-imprégnation ou une étape d'imprégnation dudit matériau fibreux par au moins polymère thermoplastique étant un polymère amorphe ou semi-cristallin dont la température de transition vitreuse est telle que Tg $\geq$ 40°C, notamment Tg $\geq$ 100°C, en particulier $\geq$ 120°C, le taux de fibres dans ledit matériau fibreux imprégné étant compris de 45 à 65 % en volume, de préférence de 50 à 60% en volume, notamment de 54 à 60% en volume, la masse moléculaire moyenne en nombre Mn dudit polymère thermoplastique étant comprise de 11000 à 25000 g/mol, la viscosité à l'état fondu dudit polymère thermoplastique étant comprise de 80 à 1500 Pa.s, telle que mesurée en rhéologie plan-plan sous 1 Hz et 2% de déformation, à une température de Tg + 220°C.

Toutes les caractéristiques détaillées ci-dessus pour le matériau fibreux et le polymère thermoplastique sont également valables pour ledit procédé.

Dans une première variante du procédé, ledit procédé comprend une étape d'imprégnation dudit matériau fibreux par au moins polymère thermoplastique, la masse moléculaire moyenne en nombre Mn dudit polymère thermoplastique étant comprise de 11000 à 20000 g/mol et de préférence 12000 à 18000, la viscosité à l'état fondu dudit polymère thermoplastique est comprise de 80 à 650 Pa.s et de préférence 100 à 450 Pa.s à une température de Tg + 220 °C et ledit polymère thermoplastique étant un polyamide de Tg < 130°C.

Avantageusement, ledit polyamide de Tg < 130°C est choisi parmi les polyamides aliphatiques et les polyamides cycloaliphatiques.

Avantageusement, ledit polyamide aliphatique est choisi parmi le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), le polyamide 11/1010, le polyamide 12/1010, ou un mélange de ceux-ci ou un copolyamide de ceux-ci, et les copolymères blocs, notamment polyamide/polyéther (PEBA) et les polyamide semi-aromatiques de Tg <130°C, notamment et les polyamides semi-aromatique sont choisis parmi les polyamides semi-aromatiques sont choisis parmi MXD10, MXD6, PA 6/6T, un PA 66/6T, un PA 6I/6T, MPMDT/10T, 11/MPMDT/10T, MPMDT/6T, un PA BACT/10T, un PA 11/BACT/10T, un MXDT/10 et un PA 11/MXDT/10T.

Avantageusement, ladite pré-imprégnation est effectuée par voie fondue, notamment à grande vitesse, en particulier à une vitesse > 1m/mn, de préférence > 2m/mn et encore plus préférentiellement > 3m/mn.

Avantageusement, dans la première variante du procédé ci-dessus défini, ledit procédé comprend les étapes suivantes :

i) imprégnation d'un matériau fibreux par au moins un polymère thermoplastique non réactif par voie fondue, notamment par pultrusion, par extrusion en tête d'équerre de polymère fondu, pour obtenir un matériau fibreux imprégné, ladite étape de pré-imprégnation étant effectuée par au moins polymère thermoplastique, la masse moléculaire moyenne en nombre Mn dudit polymère thermoplastique étant comprise de 11000 à 20000 g/mol et de préférence 12000 à 18000, la viscosité à l'état fondu dudit polymère thermoplastique est comprise de 80 à 650 Pa.s et de préférence 100 à 450 Pa.s à une température de Tg + 220 °C et ledit polymère thermoplastique étant un polyamide de Tg < 130°C
ii) optionnellement étape de mise en forme et de calibration dudit matériau fibreux imprégné pour obtenir un matériau fibreux imprégné constitué d'un ruban sous forme de bande mince d'une épaisseur de 0,2 à 5 mm et de préférence 0,2 à 1,3 mm d'épaisseur.

Dans cette première variante, l'imprégnation conduit non pas à un matériau fibreux pré-imprégné mais à un matériau fibreux imprégné ne nécessitant donc pas nécessairement d'étape de chauffage ultérieure pour finaliser l'imprégnation. Il ne serait cependant pas hors invention si une étape de chauffage ultérieure était effectuée après ladite étape d'imprégnation.

Dans une deuxième variante, ledit procédé comprend une étape de pré-imprégnation dudit matériau fibreux se présentant sous forme d'une mèche ou de plusieurs mèches parallèles par au moins un polymère thermoplastique non réactif, la masse moléculaire moyenne en nombre Mn dudit polymère thermoplastique est comprise de 14000 à 25000 et de préférence 15000 à 21000 et la viscosité à l'état fondu dudit polymère thermoplastique est comprise de 150 à 1500 Pa.s et de préférence de 200 à 750 Pa.s à une température de Tg + 220 °C et ledit polymère thermoplastique est un polymère de Tg $\geq$130°C.

Avantageusement, ledit au moins un polymère thermoplastique est un polyamide, en particulier stabilisé thermiquement.

Avantageusement, ledit polyamide est choisi parmi les polyamides semi-aromatiques.

Dans cette seconde variante, ladite pré-imprégnation est effectuée avec un système choisi parmi poudrage (dépôt par gravité d'une poudre sèche), une pulvérisation par pistolet, par passage en continu des fibres dans un lit fluidisé ou une dispersion aqueuse de poudre dudit polymère thermoplastique non réactif ou dispersion aqueuse de particules dudit polymère thermoplastique ou émulsion ou suspension aqueuse dudit polymère thermoplastique non réactif, notamment à grande vitesse.

Avantageusement, lorsque la pré-imprégnation est faite par pulvérisation par pistolet, un procédé en charge électrostatique volontaire est exclu.

Avantageusement, cette seconde variante comprend au moins une étape de chauffage sans embarrage dudit matériau fibreux pré-imprégné.

Dans cette seconde variante, la dite pré-imprégnation étant effectuée par une poudre, une dispersion, émulsion ou suspension d'une poudre, il est nécessaire de sécher la poudre, notamment déposée par dispersion, émulsion ou suspension et/ou finaliser ou commencer à finaliser l'imprégnation.

Avantageusement, ladite seconde variante comprend au moins une étape de chauffage effectuée au moyen d'au moins une pièce d'embarrage (E) et d'au moins un système de chauffage, ladite mèche ou lesdites mèches étant en contact avec une partie ou la totalité de la surface de ladite au moins une pièce d'embarrage (E) et défilant partiellement ou totalement à la surface de ladite au moins une pièce d'embarrage (E) au niveau du système de chauffage.

Cette étape de chauffage effectuée au moyen d'au moins une pièce d'embarrage (E) permet de finaliser l'imprégnation qui ne le serait pas après chauffage sans embarrage.

Lorsque l'étape de pré-imprégnation est effectuée par une dispersion, émulsion ou suspension d'une poudre, l'étape de chauffage sans embarrage est nécessaire pour sécher la ou les mèches pré-imprégnées et finaliser l'imprégnation. L'étape de chauffage effectuée au moyen d'au moins une pièce d'embarrage (E) est alors optionnelle.

Lorsque l'étape de pré-imprégnation est effectuée par lit fluidisé ou pulvérisation par pistolet, l'étape de chauffage sans embarrage est nécessaire pour commencer la finalisation de l'imprégnation, c'est-à-dire commencer la fusion dudit polymère thermoplastique sur ledit matériau fibreux. L'étape de chauffage effectuée au moyen d'au moins une pièce d'embarrage (E) est alors effectuée pour finaliser l'imprégnation.

Il est bien évident que les deux étapes de chauffage peuvent être effectuée l'une après l'autre, c'est-à-dire dans deux fours séparés, ou alors se dérouler dans le même four qui comprend alors les deux systèmes.

Avantageusement, le système de chauffage de l'étape de chauffage sans embarrage ou de l'étape de chauffage avec embarrage est choisi parmi une lampe infra rouge, une lampe UV, un chauffage par convection, un chauffage micro-onde, un chauffage laser et un chauffage Hautes Fréquences (HF).

Il est bien évident que les deux systèmes de chauffage peuvent être identiques ou différents. Lorsque le système de chauffage est choisi parmi une lampe infra rouge, une lampe UV et un chauffage par convection, alors la pièce d'embarrage est chauffante et conductrice de la chaleur.

Lorsque le système de chauffage est choisi parmi un chauffage micro-onde, un chauffage laser et un chauffage Hautes Fréquences (HF), alors la pièce d'embarrage est non chauffante et non conductrice de la chaleur

Avantageusement, une calandre chauffante est exclue de la définition du système de chauffage avec embarrage.

Avantageusement, dans la seconde variante, lorsque ladite pré-imprégnation est effectuée par lit fluidisé ou pulvérisation par buse ou pistolet, en particulier par lit fluidisé, elle est effectuée dans une cuve équipée d'au moins un embarrage (E').

Dans un mode de réalisation de la seconde variante décrite ci-dessus, ledit procédé comprend les étapes suivantes :

- Pré-imprégnation d'un matériau fibreux par au moins un polymère thermoplastique non réactif par lit fluidisé dans une cuve, équipée ou non d'au moins un embarrage (E'), par pulvérisation par buse ou pistolet par voie sèche dans une cuve, équipée ou non d'au moins un embarrage (E') pour obtenir un matériau fibreux pré-imprégné, ladite étape de pré-imprégnation étant effectuée par au moins un polymère thermoplastique non réactif, la masse moléculaire moyenne en nombre Mn dudit polymère thermoplastique est comprise de 14000 à 25000 et de préférence 15000 à 21000 et la viscosité à l'état fondu dudit polymère thermoplastique est comprise de 150 à 1500 Pa.s et de préférence de 200 à 750 Pa.s à une température de Tg + 220 °C et ledit polymère thermoplastique est un polymère de Tg $\geq$ 130°C, étape de chauffage sans embarrage dudit matériau fibreux pré-imprégné pour obtenir un matériau fibreux pré-imprégné,

- étape de chauffage effectuée au moyen d'au moins une pièce d'embarrage (E) et d'au moins un système de chauffage pour obtenir un matériau fibreux imprégné,

- étape de chauffage effectuée au moyen d'au moins une pièce d'embarrage (E) et d'au moins un système de chauffage pour obtenir un matériau fibreux imprégné,

- optionnellement étape de mise en forme et de calibration de la mèche ou desdites mèches parallèles dudit matériau fibreux imprégné pour obtenir un matériau fibreux imprégné constitué d'un ruban sous forme de bande mince.

Dans un autre mode de réalisation de la seconde variante décrite ci-dessus, ledit procédé comprend les étapes suivantes :

- Pré-imprégnation d'un matériau fibreux par au moins un polymère thermoplastique non réactif, notamment par passage en continu des fibres dans un lit fluide de poudre de polymère sèche, une dispersion aqueuse de poudre polymère ou dispersion aqueuse de particules de polymère ou émulsion ou suspension aqueuse de polymère, ladite étape de pré-imprégnation étant effectuée par au moins polymère thermoplastique amorphe ou semi-cristallin et ledit polymère thermoplastique est un polymère de Tg $\geq$130°C, ledit polymère thermoplastique non réactif présentant une masse moléculaire moyenne en nombre Mn dudit polymère thermoplastique étant comprise de 14000 à 25000 et de préférence 15000 à 21000 et la viscosité à l'état fondu dudit polymère thermoplastique est comprise de 150 à 1500 Pa.s et de préférence de 200 à 750 Pa.s, telle que mesurée en rhéologie plan-plan sous 1 Hz et 2% de déformation, à une température de Tg + 220°C,
- étape de chauffage sans embarrage dudit matériau fibreux pré-imprégné pour obtenir un matériau fibreux pré-imprégné,
- optionnellement étape de chauffage effectuée au moyen d'au moins une pièce d'embarrage (E) et d'au moins un système de chauffage, tels que définis ci-dessus, pour obtenir un matériau fibreux imprégné,
- optionnellement étape de mise en forme et de calibration de la mèche ou desdites mèches parallèles dudit matériau fibreux imprégné pour obtenir un matériau fibreux imprégné constitué d'un ruban sous forme de bande mince.

Avantageusement, la présente invention concerne un procédé de préparation d'un matériau fibreux imprégné tel que défini ci-dessus, caractérisé en ce que un ou plusieurs embarrage(s) (E") est(sont) présent(s) en amont dudit système.

L'expression « amont dudit système » signifie que le ou les embarrage(s) (E") est(sont) présent(s) avant l'étape de pré-imprégnation.

Avantageusement, la présente invention concerne un procédé de préparation d'un matériau fibreux imprégné tel que défini ci-dessus, caractérisé en ce que ledit procédé est effectué pour la voie poudre sèche à une vitesse comprise d'au moins 5 à 30 m/mn et pour la dispersion aqueuse notamment d'au moins 15 m/min.

**Procédé de préparation du matériau fibreux imprégné**

Le matériau fibreux imprégné, notamment monocouche, peut être préparé en deux ou trois étapes comme décrit ci-dessus avec une étape optionnelle de mise en forme et calibration.

**La première étape peut être effectuée par pré-imprégnation du matériau fibreux ou par imprégnation du matériau fibreux.**

**Première étape** : **pré-imprégnation**

La première étape de pré-imprégnation pour obtenir un matériau fibreux pré-imprégné peut être effectuée selon les techniques bien connues de l'homme du métier et notamment choisies parmi celles décrites ci-dessus.

Ainsi elle peut être effectuée par une technologie de pré-imprégnation par dépôt de poudre, par passage en continu des fibres dans une dispersion aqueuse de poudre polymère ou dispersion aqueuse de particules de polymère ou émulsion ou suspension aqueuse de polymère, par lit fluidisé, équipé ou non d'au moins un embarrage (E'), par projection par buse ou pistolet par voie sèche dans une cuve, équipée ou non d'au moins un embarrage (E').

**Lit fluidisé** :

L'étape de pré-imprégnation peut être effectuée en lit fluidisé.

Un exemple d'unité de mise en œuvre d'un procédé de fabrication sans l'étape de chauffage au moyen d'au moins une pièce d'embarrage est décrit dans la demande internationale WO 2015/121583.

Ce système décrit l'utilisation d'une cuve comprenant un lit fluidisé pour effectuer l'étape de pré-imprégnation et peut être utilisé dans le cadre de l'invention.

Un autre exemple d'unité de mise en œuvre d'un procédé de fabrication sans l'étape de chauffage au moyen d'au moins une pièce d'embarrage mais avec des embarrages présents dans la cuve est décrit dans WO 2018/115736.

Avantageusement, la cuve comprenant le lit fluidisé est muni d'au moins une pièce d'embarrage (E') qui peut être un rouleau de compression.

Par pièce d'embarrage (E'), il faut entendre tout système sur lequel la mèche à la possibilité de défiler dans la cuve. La pièce d'embarrage (E') peut avoir n'importe quelle forme à partir du moment où la mèche peut défiler dessus.

Il faut noter que les pièces d'embarrage (E) et (E') peuvent être identiques ou différentes que ce soit au niveau du matériau ou de la forme et ses caractéristiques (diamètre, longueur, largeur, hauteur ... en fonction de la forme).

Cependant, la pièce d'embarrage (E') n'est ni chauffante ni chauffée.

L'étape de pré-imprégnation du matériau fibreux est réalisée par passage d'une ou plusieurs mèches dans un dispositif de pré-imprégnation en continu, comprenant une cuve (10) muni d'au moins une pièce d'embarrage (E') et comprenant un lit fluidisé (12) de poudre de ladite matrice polymère.

La poudre de ladite matrice polymère ou polymère est mise en suspension dans un gaz G (de l'air par exemple) introduit dans la cuve et circulant dans la cuve (10) à travers une trémie (11). La ou les mèches sont mises en circulation dans ce lit fluidisé (12).

La cuve peut avoir toute forme, notamment cylindrique ou parallélépipédique, en particulier un parallélépipède rectangle ou un cube, avantageusement un parallélépipède rectangle.

La cuve (10) peut être une cuve ouverte ou fermée.

Dans le cas où la cuve est fermée, elle est alors équipée d'un système d'étanchéité pour que la poudre de ladite matrice polymère ne puisse pas sortir de ladite cuve.

Cette étape de pré-imprégnation est donc effectuée par voie sèche, c'est à dire que la matrice polymère thermoplastique est sous forme de poudre, notamment en suspension dans un gaz, en particulier de l'air, mais ne peut pas être en dispersion dans un solvant ou dans l'eau. Chaque mèche à pré-imprégner est déroulée d'un dispositif à dévidoirs sous la traction engendrée par des cylindres (non représentés).

Chaque dévidoir est pourvu d'un frein (non représenté) de manière à appliquer une tension sur chaque mèche de fibres. Dans ce cas, un module d'alignement permet de disposer les mèches de fibres parallèlement les unes par rapport aux autres. De cette manière les mèches de fibres ne peuvent pas être en contact les unes avec les autres, ce qui permet d'éviter une dégradation mécanique des fibres par frottement entre elles.

La mèche de fibres ou les mèches de fibres parallèles passent alors dans une cuve (10), comprenant en particulier un lit fluidisé (12), munie d'une pièce d'embarrage (E') qui est un rouleau de compression (24). La mèche de fibres ou les mèches de fibres parallèles ressort(ent) ensuite de la cuve après pré-imprégnation après contrôle éventuel du temps de séjour dans la poudre.

L'expression « temps de séjour dans la poudre» signifie le temps durant lequel la mèche est en contact avec ladite poudre dans le lit fluidisé.

Si le matériau fibreux, tel que les mèches de fibres de verre, de basalte ou de carbone, présente un ensimage, une étape optionnelle de dé-ensimage peut être effectuée avant le passage du matériau fibreux dans la cuve.

Avantageusement, la cuve utilisée comprend un lit fluidisé avec un embarrage et ladite étape de pré-imprégnation est effectuée avec un épanouissement simultané de ladite mèche ou desdites mèches entre l'entrée et la sortie de la cuve comprenant ledit lit fluidisé.

L'expression « entrée de la cuve » correspond à la tangente verticale du bord de la cuve qui comprend le lit fluidisé.

L'expression « sortie de la cuve » correspond à la tangente verticale de l'autre bord de la cuve qui comprend le lit fluidisé.

L'épanouissement consiste à singulariser au maximum chaque fibre constitutive de ladite mèche des autres fibres qui l'entourent dans son plus proche espace. Il correspond à l'étalement transverse de la mèche.

En d'autres termes, l'étalement transverse ou la largeur de la mèche augmente entre l'entrée de la cuve comprenant le lit fluidisé et la sortie de la cuve comprenant le lit fluidisé et permet ainsi une pré-imprégnation améliorée du matériau fibreux.

L'utilisation d'au moins un embarrage (E'), en particulier un rouleau de compression cylindrique, dans l'étape de pré-imprégnation permet donc une pré-imprégnation améliorée par rapport aux procédés de l'art antérieur.

L'expression « rouleau de compression » signifie que la mèche qui défile s'appuie partiellement ou totalement sur la surface dudit rouleau de compression, ce qui induit l'épanouissement de ladite mèche.

Avantageusement, ledit au moins un rouleau de compression est de forme cylindrique et le pourcentage d'épanouissement de ladite mèche ou desdites mèches entre l'entrée et la sortie de la cuve dudit lit fluidisé est compris de 1% à 1000%, préférentiellement de 100% à 800% préférentiellement de 200% à 800%, préférentiellement de 400% à 800%.

Le pourcentage d'épanouissement est égal au rapport de la largeur finale de la mèche sur la largeur initiale de la mèche multiplié par 100.

Le diamètre dudit au moins un rouleau de compression est compris de 3 mm à 500 mm, préférentiellement de 10 mm à 100 mm, en particulier de 20 mm à 60 mm.

Au-dessous de 3 mm, la déformation de la fibre induite par le rouleau de compression est trop importante.

Avantageusement, le rouleau de compression est cylindrique et non cannelé et en particulier est métallique.

Lorsque la pièce d'embarrage (E') est au moins un rouleau de compression, selon une première variante, un seul rouleau de compression est présent dans le lit fluidisé et ladite pré-imprégnation est effectuée au niveau de l'angle $\alpha_1$ formé par ladite mèche ou lesdites mèches entre l'entrée dudit rouleau de compression et la tangente verticale audit rouleau de compression.

L'angle $\alpha_1$ formé par ladite mèche ou lesdites mèches entre l'entrée dudit rouleau de compression et la tangente verticale audit rouleau de compression permet la formation d'une zone dans laquelle la poudre va se concentrer conduisant ainsi à un « effet de coin » qui avec l'épanouissement simultané de la mèche par ledit rouleau de compression permet une pré-imprégnation sur une largeur plus importante de mèche et donc une pré-imprégnation améliorée comparée aux techniques de l'art antérieur améliorée.

Dans toute la description, toutes les valeurs d'angle données sont exprimées en valeurs absolue.

Avantageusement, l'angle $\alpha_1$ est compris de 0 à 89°, préférentiellement 5° à 85°, préférentiellement de 5° à 45°, préférentiellement de 5° à 30°.

Néanmoins, un angle $\alpha_1$ compris de 0 à 5° est susceptible d'engendrer des risques de sollicitation mécanique, ce qui conduira à la casse des fibres et un angle $\alpha_1$ compris de 85° à 89° ne crée pas suffisamment d'effort mécanique pour créer « l'effet de coin ».

Une valeur de l'angle $\alpha_1$ égale à 0° correspond donc à une fibre verticale. Il est bien évident que la hauteur du rouleau de compression cylindrique est réglable permettant ainsi de pouvoir positionner la fibre verticalement.

Avantageusement, le bord d'entrée de la cuve (23a) est équipé d'un rouleau, notamment cylindrique et rotatif sur lequel défile ladite mèche ou lesdites mèches conduisant ainsi à un épanouissement préalable à la pré-imprégnation.

Il est bien évident que « l'effet de coin » provoqué par l'angle $\alpha_1$ favorise la pré-imprégnation sur une face mais l'épanouissement de ladite mèche obtenu grâce au rouleau de compression permet aussi d'avoir une pré-imprégnation sur l'autre face de ladite mèche. Autrement dit, ladite pré-imprégnation est favorisée sur une face de ladite mèche ou desdites mèches au niveau de l'angle $\alpha_1$ formé par ladite mèche ou lesdites mèches entre l'entrée dudit au moins un rouleau de compression $R_1$ et la tangente verticale au rouleau de compression $R_1$ mais l'épanouissement permet aussi de pré-imprégner l'autre face.

L'angle $\alpha_1$ est tel que défini ci-dessus.

Avantageusement, le diamètre en volume D90 des particules de poudre de polymère thermoplastique est compris 30 à 500 $\mu$m, avantageusement de 80 à 300 $\mu$m.

Avantageusement, le diamètre en volume D10 des particules de poudre de polymère thermoplastique est compris de 5 à 200 $\mu$m, avantageusement de 15 à 100 $\mu$m.

Avantageusement, le diamètre en volume des particules de poudre de polymère thermoplastique est compris dans le ratio D90/D10, soit compris de 1,5 à 50, avantageusement de 2 à 10.

Avantageusement, le diamètre moyen D50 en volume des particules de poudre de polymère thermoplastique est compris de 10 à 300 $\mu$m, notamment de 30 à 200 $\mu$m, plus particulièrement de 45 à 200$\mu$m.

Les diamètres en volume des particules (D10, D50 et D90) sont définis selon la norme ISO 9276 :2014.

Le « D50 » correspond au diamètre moyen en volume, c'est à dire la valeur de la taille de particule qui divise la population de particules examinée exactement en deux.

Le « D90 » correspond à la valeur à 90% de la courbe cumulée de la distribution granulométrique en volume.

Le « D10 » correspond à la correspond à la taille de 10% du volume des particules.

Selon d'autres variantes, deux, trois rouleaux ou plus peuvent être présents dans le lit fluidisé.

**Pulvérisation par pistolet** :

Un autre exemple d'unité de mise en œuvre d'un procédé de fabrication sans l'étape de chauffage au moyen d'au moins une pièce d'embarrage mais avec des embarrages présents dans la cuve est décrit dans WO 2018/115737.

L'étape de pré-imprégnation du matériau fibreux peut également être effectuée par passage d'une ou plusieurs mèches dans un dispositif de pré-imprégnation en continu par projection, comprenant une cuve, comprenant une ou des buses(s) ou un ou des pistolet(s) projetant la poudre de polymère sur le matériau fibreux en entrée de rouleau.

La poudre de polymère(s) ou polymère est projetée dans la cuve au moyen de buse(s) ou de pistolet(s) au niveau de la pièce d'embarrage notamment du rouleau de compression (en entrée) sur ledit matériau fibreux. La ou les mèches sont mises en circulation dans cette cuve.

Toutes les caractéristiques des embarrages, et notamment des rouleaux de compression, de l'épanouissement, et de l'angle $\alpha_1$ provoquant l'effet de coin et détaillées pour le lit fluidisé sont également valables pour la pulvérisation par pistolet.

Selon d'autres variantes, deux, trois rouleaux ou plus peuvent être présents munis chacun d'un pistolet.

**Première étape :imprégnation**

La première étape d'imprégnation pour obtenir un matériau fibreux imprégné peut être effectuée selon les techniques bien connues de l'homme du métier et notamment choisies parmi celles décrites ci-dessus.

Ainsi elle peut être effectuée par voie fondue, notamment par pultrusion, par extrusion en tête d'équerre de polymère fondu,

L'étape d'imprégnation est effectué notamment par extrusion en tête d'équerre de la matrice polymère et passage de ladite mèche ou desdites mèches dans cette tête d'équerre puis passage dans une filière chauffée, la tête d'équerre étant éventuellement munie d'embarrages fixes ou rotatifs sur lesquels la mèche défile provoquant ainsi un épanouissement de ladite mèche permettant une pré-imprégnation de ladite mèche.

L'imprégnation peut notamment être effectuée telle que décrite dans US 2014/0005331A1 à la différence que l'alimentation en résine est effectuée des deux côtés de ladite mèche et qu'il n'existe pas de surface de contact éliminant une partie de la résine sur l'une des deux surfaces.

Avantageusement, l'étape d'imprégnation est effectuée par voie fondue à grande vitesse, c'est-à-dire avec une vitesse de défilement de ladite mèche ou desdites mèches, en particulier à une vitesse d'au moins 1 à 10 m/min pour la voie fondue, en particulier d'au moins 2 m/min.

**Deuxième étape** : **chauffage sans embarrage et séchage du matériau fibreux pré-imprégné**

Comme déjà indiqué ci-dessus, cette étape de chauffage sans embarrage permet de sécher la mèche pré-imprégnée, notamment par dispersion, suspension ou émulsion, et de commencer ou de finaliser l'imprégnation en fonction de la longueur du four contenant le système de chauffage.

Le système de chauffage permet la fusion dudit polymère thermoplastique imprégnant ledit matériau fibreux.

Ledit système de chauffage est notamment un IR, micro-onde hautes fréquences ou laser, en particulier IR de puissance comprise entre 0,1W et 10kW, plus préférentiellement entre 0,1 et 6kW, plus préférentiellement entre 0,1 et 3kW, encore plus préférentiellement entre 0,6 et 3kW, encore plus préférentiellement entre 0,6 et 1,8kW.

**Troisième étape optionnelle: chauffage avec embarrages du matériau fibreux pré-imprégné et finalisation de l'imprégnation.**

L'étape de pré-imprégnation peut donc être effectuée par tout moyen muni ou non d'au moins un embarrage (E').

La présence de l'embarrage permet l'épanouissement de la mèche et favorise la pré-imprégnation. Cependant, la présence de cet embarrage n'est pas indispensable à partir du moment où un système de chauffage muni d'au moins une pièce d'embarrage (E) est présent après l'étape de pré-imprégnation pour finaliser l'imprégnation.

L'expression « pièce d'embarrage (E)» signifie tout système sur lequel la mèche a la possibilité de défiler. La pièce d'embarrage (E) peut avoir n'importe quelle forme à partir du moment où la mèche peut défiler dessus. Elle peut être fixe ou en rotation.

Le système de chauffage est tout système dégageant de la chaleur ou émettant un rayonnement susceptible de chauffer la pièce d'embarrage (E).

Il peut être choisi parmi une lampe infrarouge, une lampe UV, un chauffage par convection, un chauffage micro-onde, un chauffage laser et un chauffage Hautes Fréquences (HF).

Le système de chauffage permet la fusion dudit polymère thermoplastique imprégnant ledit matériau fibreux.

Ledit système de chauffage est notamment un IR, micro-onde hautes fréquences ou laser, en particulier IR de puissance comprise entre 0,1W et 10kW, plus préférentiellement entre 0,1 et 6kW, plus préférentiellement entre 0,1 et 3kW, encore plus préférentiellement entre 0,6 et 3kW, encore plus préférentiellement entre 0,6 et 1,8kW.

La pièce d'embarrage (E) est par conséquent conductrice ou absorbe le rayonnement émis par la chaleur.

L'expression « pièce d'embarrage (E) conductrice de la chaleur » signifie que la pièce d'embarrage (E) est constituée d'un matériau capable d'absorber et de conduire la chaleur. Il peut être également un système de chauffage par ondes hautes fréquences, micro-ondes ou laser.

Dans ce cas, la pièce d'embarrage est non conductrice de la chaleur ou n'absorbe pas le rayonnement émis par la chaleur.

L'expression « pièce d'embarrage (E) non conductrice de la chaleur » signifie que la pièce d'embarrage (E) est constituée d'un matériau incapable d'absorber et de conduire la chaleur. Ladite au moins une pièce d'embarrage (E) est situé ou comprise dans l'environnement du système de chauffage, c'est-à-dire qu'elle n'est pas à l'extérieur du système de chauffage.

Avantageusement ledit système de chauffage surmonte ladite au moins une pièce d'embarrage (E). Le système de chauffage est à une hauteur suffisante pour que le polymère présent sur la mèche puisse fondre mais sans dégrader ledit polymère.

Néanmoins, ledit système de chauffage comprend soit uniquement ladite au moins une pièce d'embarrage (E) mais peut comprendre également une portion de la mèche, hors dudit système d'embarrage (E), ladite portion de mèche étant située avant et/ou après ledit système d'embarrage (E).

La hauteur entre le système de chauffage et les embarrages est comprise de 1 à 100 cm, préférentiellement de 2 à 30 cm, en particulier de 2 à 10 cm.

On ne sortirait pas du cadre de l'invention si la pièce d'embarrage (E) était positionnée dans un four comportant un système de chauffage, par exemple par IR mais que ladite pièce d'embarrage n'était pas positionnée exactement sous les éléments chauffant par exemple par IR. On ne sortirait pas de l'invention si le four comportait un mode de chauffage par convection et un système de chauffage par IR.

On ne sortirait pas de l'invention non plus si ladite pièce d'embarrage (E) placée dans ce four ou dans l'environnement de ce four, était équipée d'un moyen de chauffage autonome comme une résistance permettant de chauffer ladite pièce d'embarrage (E), indépendamment par exemple du rayonnement des lampes IR et de la convection naturelle du four et que, compte tenu la vitesse de la ligne, le polymère présent dans les rubans ou les mèches soit encore à l'état fondu lorsqu'il arrive en contact avec ladite pièce d'embarrage. La hauteur entre le système de chauffage et les embarrages est comprise de 1 à 100 cm, préférentiellement de 2 à 30 cm, en particulier de 2 à 10 cm.

Il est bien évident qu'un second système de chauffage peut être présent sous les embarrages permettant ainsi une fusion uniforme dudit polymère sur les deux surfaces de la mèche.

Le système de chauffage peut être un système horizontal. Cependant, le ou les système(s) de chauffage peuvent être disposés verticalement avec défilement également vertical de la mèche au travers des embarrages.

Par conséquent, cette étape de chauffage permet de parfaire l'imprégnation de la mèche effectuée au préalable lors de l'étape de pré-imprégnation et notamment d'obtenir une imprégnation homogène et à cœur.

En effet, quel que soit le système utilisé pour l'étape de pré-imprégnation, un premier épanouissement se produit lors de cette étape, notamment si l'étape de pré-imprégnation est effectuée avec utilisation de pièces d'embarrage (E'), telle que dans un lit fluidisé avec au moins un embarrage comme décrit ci-dessus.

Un premier épanouissement de la mèche se produit au niveau desdits rouleaux de compression correspondants aux pièces d'embarrage (E') avec « effet de coin » en raison du défilement partiel ou total de ladite mèche sur la ou lesdites pièce(s) d'embarrage (E') et un deuxième épanouissement se produit lors de l'étape de chauffage, au niveau desdits rouleaux de compression correspondants aux pièces d'embarrage (E) en raison du défilement partiel ou total de ladite mèche sur la ou lesdites pièce(s) d'embarrage (E).

Le système de chauffage peut être séparé en deux et donc constitué de deux systèmes de chauffage, un premier système de chauffage avant lesdites pièces d'embarrage (E) et un deuxième système de chauffage comprenant lesdites pièces d'embarrage. Il est bien évident que la distance entre les deux systèmes de chauffage est alors suffisante pour que le polymère reste à l'état de fusion.

Les deux systèmes de chauffage peuvent être de même nature ou de nature différente et de puissance identique ou différente.

Ce deuxième épanouissement est précédé lors du passage de la mèche dans le système de chauffage, avant son défilement partiel ou total sur la ou lesdites pièce(s) d'embarrage (E), d'une rétractation de la mèche en raison de la fusion du polymère sur ladite mèche.

Ce deuxième épanouissement combiné à la fusion de ladite matrice polymère par le système de chauffage et à la rétractation de la mèche permettent d'homogénéiser la pré-imprégnation et finaliser ainsi l'imprégnation et d'avoir ainsi une imprégnation à cœur et d'avoir un taux élevé de fibres en volume, notamment constant dans au moins 70% du volume du ruban, notamment dans au moins 80% du volume du ruban, en particulier dans au moins 90% du volume du ruban, plus particulièrement dans au moins 95% du volume du ruban, ainsi que de diminuer la porosité.

Avantageusement, le pourcentage d'épanouissement lors de l'étape de chauffage entre l'entrée du premier rouleau de compression $R'_1$ et la sortie du dernier rouleau de compression $R'_i$ est d'environ 0 à 300%, en particulier de 0 à 50%.

Les différents épanouissements lors de l'étape de chauffage combinés à la fusion du polymère thermoplastique et la rétractation de la mèche pendant ladite étape de chauffage permettent l'obtention d'un taux de fibres imprégnées après l'étape de chauffage compris de 45 à 65 % en volume, de préférence de 50 à 60% en volume, notamment de 54 à 60% (taux de fibres qui ne peut être atteint par les techniques classiques de voie fondue), le taux de fibres en volume et la répartition des fibres étant substantiellement identiques en moyenne de part et d'autre du plan médian du matériau fibreux sur toute la longueur dudit matériau fibreux conduisant ainsi à l'obtention d'un matériau fibreux notamment monocouche.

En dessous de 45% de fibres, le renfort n'a pas d'intérêt pour ce qui concerne les propriétés mécaniques.

Au-dessus de 65%, les limites du procédé sont atteintes et les propriétés mécaniques sont reperdues.

Avantageusement, le taux de porosité dans ledit matériau fibreux imprégné est inférieur à 10%, notamment inférieur à 5%, en particulier inférieur à 2%.

**Etape de mise en forme et calibration : obtention de la bande mince**

Une étape de mise en forme de la mèche ou desdites mèches parallèles et de calibration dudit matériau fibreux imprégné peut être effectuée après sortie du deuxième système de chauffage.

Cette étape peut être effectuée directement après sortie du deuxième système de chauffage et dans ce cas la vitesse de défilement de la mèche est identique dans les deuxième et troisième systèmes de chauffage ou de manière différée, ce qui signifie que la vitesse de défilement de la mèche peut être différente entre le deuxième et le troisième système de chauffage.

Cette étape peut être effectuée selon l'un des modes de réalisation suivants :

1) passage d'une bande après imprégnation sur un ou plusieurs embarrages (tels que définis pour (E)) dont au moins un embarrage est cranté (gorgé), la largeur moyenne dudit feuillard étant inférieure à l'embarrage cranté (ou gorgé).

Au moins un desdits embarrages est situé sous un troisième système de chauffage, notamment IR, micro-onde ou hautes fréquences ou laser, en particulier IR de puissance (pour chaque ruban ou empilement de rubans parallèles) comprise entre 0,1W et 10kW, plus préférentiellement entre 0,1 et 6kW, plus préférentiellement entre 0,1 et 3kW, encore plus préférentiellement entre 0,6 et 3kW, encore plus préférentiellement entre 0,6 et 1,8kW. Avantageusement, ledit au moins un rouleau cranté (41) est situé en premier et est hors du troisième système de chauffage (45). Avantageusement, un deuxième embarrage cranté (44) est présent en sortie et hors du troisième système de chauffage.

Le passage sur les embarrages non crantés (42) et (43) permet de ré épanouir le feuillard à la largeur de l'embarrage cranté.

Le diamètre du ou des embarrage(s) cranté(s) (41) et (44) est compris de 12 mm à 50 mm, en particulier de 12 mm à 30 mm.

Le diamètre du ou des embarrage(s) non cranté(s) (42) et (43) est compris de 10 mm à 50 mm, en particulier de 10 mm à 30 mm.

Après passage sous le troisième système de chauffage, la bande mise en forme à la largeur de l'embarrage cranté en sortie du troisième système de chauffage passe au niveau de calandres chauffantes (46) montées en série équipées d'un IR de 1kW chacune et dont la puissance délivrée est modulable, hors du troisième système de chauffage, pour obtenir la bande calibrée.

2) passage d'une bande sur un ou plusieurs embarrages (tels que définis pour (E)) dont au moins un embarrage est cranté (gorgé), la largeur moyenne de ladite bande étant supérieure à l'embarrage cranté (ou gorgé).

Lesdits embarrages sont situés sous un troisième système de chauffage, notamment IR, micro-onde hautes fréquences ou laser, en particulier IR de puissance (pour chaque ruban ou empilement de rubans parallèles) comprise entre 0,1W et 10kW, plus préférentiellement entre 0,1 et 6kW, plus préférentiellement entre 0,1 et 3kW, encore plus préférentiellement entre 0,6 et 3kW, encore plus préférentiellement entre 0,6 et 1,8kW.

Avantageusement, ledit au moins un rouleau cranté est situé en premier.

Le passage sur le premier embarrage cranté permet de réduire la largeur du feuillard en dessous de la largeur de la gorge crantée. Avantageusement, un deuxième embarrage cranté est présent en sortie et hors du troisième système de chauffage avec une gorge de largeur supérieure à la largeur du feuillard.

Après passage sous le troisième système de chauffage, le feuillard mis en forme à la largeur de l'embarrage cranté en sortie et hors du troisième système de chauffage passe au niveau de calandres chauffantes montées en série équipées d'un IR de 1kW, hors du troisième système de chauffage, pour obtenir la bande calibrée.

Un système de calandrage avec gestion de la pression et de l'écartement entre rouleaux tel que décrit dans WO 2015/121583 peut être utilisé dans ces deux modes de réalisation.

L'embarrage est en particulier un rouleau cranté fixe ou rotatif, voire contre rotatif, en particulier fixe pour rassembler ledit matériau fibreux imprégné à la bonne largeur.

Le rouleau cranté peut également avoir des bords arrondis au niveau des contacts latéraux avec l'embarrage pour éviter de détériorer les fibres en bord de bande mince.

L'expression « bords arrondis » signifie que le fond du cran est de forme concave ou convexe.

Avantageusement, le premier mode de réalisation de l'étape de mise en forme et calibration est préféré.

Cela permet donc de travailler avec des grandes vitesses de défilement et de diminuer ainsi les coûts de production.

Selon un autre aspect, la présente invention concerne l'utilisation d'un matériau fibreux imprégné, tel que défini ci-dessus, pour la préparation de rubans adaptés à la fabrication de pièces composites en trois dimensions, par dépose automatique desdits rubans au moyen d'un robot.

Toutes les caractéristiques détaillées ci-dessus pour le matériau fibreux sont également valables pour ladite utilisation.

Selon un autre aspect, la présente invention concerne l'utilisation d'un matériau fibreux imprégné, tel que défini ci-dessus, pour la préparation de feuilles thermoformables.

Toutes les caractéristiques détaillées ci-dessus pour le matériau fibreux sont également valables pour ladite utilisation.

Avantageusement, le matériau fibreux imprégné utilisé ci-dessus est prédécoupé en morceaux, lesdits morceaux étant associés au hasard ou orientés pour la préparation de la feuille thermoformable.

Le thermoformage est effectué au-delà de la Tg pour un polymère thermoplastique amorphe ou entre la Tg et la Tf pour un polymère thermoplastique semi-cristallin mais il peut également être effectué au-delà de la Tf du polymère thermoplastique pour un semi-cristallin.

Le matériau fibreux imprégné est prédécoupé en morceaux présentant une largeur égale à la largeur initiale dudit matériau fibreux et une longueur comprise de 5 à 50 mm, en particulier de 20 à 30 mm, lesdits morceaux étant associés au hasard ou orientés pour la préparation de la feuille thermoformable.

Selon un autre aspect, la présente invention concerne l'utilisation d'au moins un polymère thermoplastique non réactif, ledit au moins un polymère thermoplastique non réactif étant un polymère thermoplastique amorphe ou semi-cristallin dont la température de transition vitreuse est telle que $Tg \geq 40°C$, notamment $Tg \geq 100°C$, en particulier $\geq 120°C$, ledit polymère thermoplastique présentant la masse moléculaire moyenne en nombre Mn dudit polymère thermoplastique étant comprise de 11000 à 25000 g/mol, la viscosité à l'état fondu dudit polymère thermoplastique étant comprise de 80 à 1500 Pa.s, telle que mesurée en rhéologie plan-plan sous 1 Hz et 2% de déformation, à une température de $Tg + 220°C$, tel que défini ci-dessus, pour imprégner un matériau fibreux.

Toutes les caractéristiques détaillées ci-dessus pour le matériau fibreux sont également valables pour ladite utilisation.

**Modes de réalisation avantageux du procédé de l'invention**

Avantageusement, le matériau fibreux est choisi parmi les mèches de fibre de carbone en particulier supérieures ou égales à 12K, en particulier choisi parmi 12K, 24K, 48K, 50K et 400K, notamment 12K, 24K, 48K et 50K, et des fibres de verre en particulier dont le grammage est supérieur ou égal à 1200 Tex, notamment supérieur ou égal à 2400 Tex, supérieur ou égal à 4800 Tex.

Avantageusement, le prépolymère thermoplastique utilisé pour imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/BACT/10T, un PA 11/MXDT/10T, un PEKK, un PEEK et un PEI ou un mélange de ceux-ci.

Avantageusement, le prépolymère thermoplastique utilisé pour imprégner la fibre de verre est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/BACT/10T, un PA 11/MXDT/10T, un PEKK, un PEEK et un PEI ou un mélange de ceux-ci.

Avantageusement, le matériau fibreux comprend des mèches de fibre de carbone supérieures ou égales à 12K, en particulier choisi parmi 12K, 24K, 48K, 50K et 400K, notamment 12K, 24K, 48K et 50K, et le polymère thermoplastique utilisé pour pré-imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK, un PEEK et un PEI ou un mélange de ceux-ci.

Avantageusement, le matériau fibreux est constitué de mèches de fibre de carbone supérieures ou égales à 12K, en particulier choisi parmi 12K, 24K, 48K, 50K et 400K, notamment 12K, 24K, 48K et 50K, et le polymère thermoplastique utilisé pour pré-imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK, un PEEK et un PEI ou un mélange de ceux-ci.

Avantageusement, le matériau fibreux comprend des mèches de fibre de verre dont le grammage est supérieur ou égal à 1200 Tex, notamment supérieur ou égal à 2400 Tex, supérieur ou égal à 4800 Tex et le polymère thermoplastique utilisé pour pré-imprégner la fibre de verre est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK, un PEEK et un PEI ou un mélange de ceux-ci.

Avantageusement, le matériau fibreux est constitué de mèches de fibre de verre dont le grammage est supérieur ou égal à 1200 Tex, notamment supérieur ou égal à 2400 Tex, supérieur ou égal à 4800 Tex et le polymère thermoplastique utilisé pour pré-imprégner la fibre de verre est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK, un PEEK et un PEI ou un mélange de ceux-ci.

Brèves description des figures

[Fig. 1] présente la morphologie d'une plaque composite microfissurée mais parfaitement imprégnées obtenues à partir d'un polymère 11/10T/6T de trop faible masse moléculaire Mn=10500g/mol, de viscosité en fondu (rhéologie plan-plan sous 1 Hz et 2% de déformation) de 70 Pa.s à 330°C.
La barre d'échelle représente $50\mu$m.
[Fig. 2] présente la morphologie de la même plaque composite microfissurée que la figure 1 mais à un grossissement plus important.
La barre d'échelle représente $20\mu$m.
[Fig. 3] présente la morphologie d'une plaque composite présentant des zones de fibres sèches obtenues à partir d'un polymère 11/10T/6T de trop forte masse moléculaire Mn=27200g/mol et de viscosité en fondu (rhéologie plan-plan sous 1 Hz et 2% de déformation) de 1790 Pa.s à 330°C.
La barre d'échelle représente $100\mu$m.
[Fig. 4] présente la morphologie de la même plaque composite avec zones sèches que la figure 3 mais à un grossissement plus important.
La barre d'échelle représente $20\mu$m.

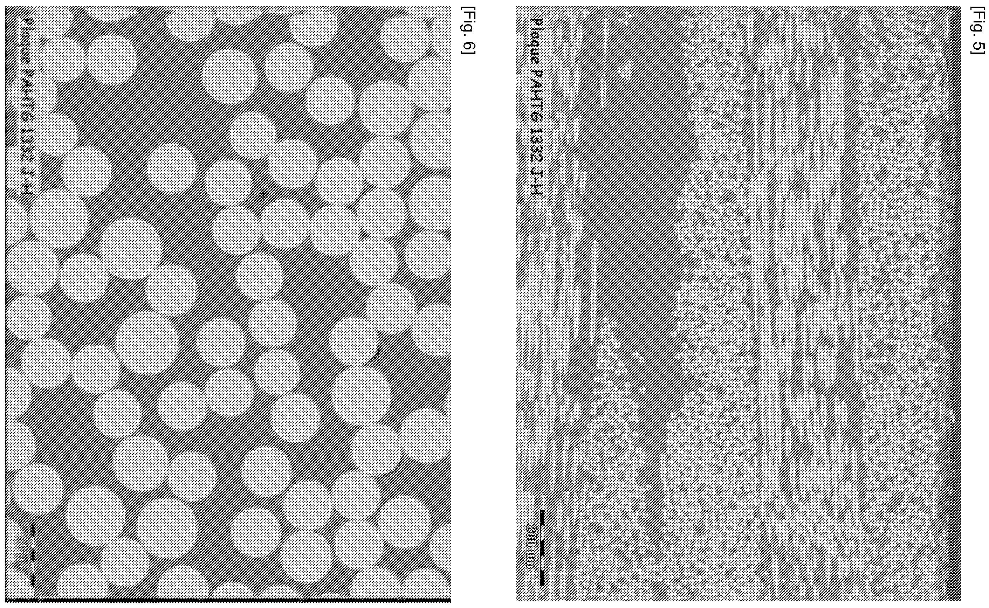

[Fig. 5] présente la morphologie d'une plaque composite ne présentant aucune micro fissure ni zone sèche obtenues à partir d'un polymère 11/10T/6T de masse Mn=13700g/mol, de viscosité en fondu (rhéologie plan-plan, sous 1 Hz et 2% de déformation à Tg + 220°C) de 185 Pa.s à 330°C, attestant que la masse moléculaire du polymère est optimale.
La barre d'échelle représente $200\mu$m.
[Fig. 6] présente la morphologie de la même plaque composite ne présentant aucune micro fissure ni zone sèche que la figure 5 mais à un grossissement plus important.
La barre d'échelle représente $20\mu$m.

Exemples

Les exemples suivants illustrent de façon non limitative la portée de l'invention.

**Exemple 1 (exemple comparatif):**

Imprégnation d'un matériau fibreux avec un PA de type 11/10T/6T, de Tg 110°C de masse Mn=10500g/mol, de viscosité en fondu (rhéologie plan-plan sous 1 Hz et 2% de déformation) de 70 Pa.s à 330°C.

Ce polymère est broyé en poudre d'un diamètre moyen D50=$110\mu$m puis la poudre est déposée par gravité à la surface d'un renfort fibre de verre Advantex SE4535 de 3B, tissé sous forme d'un UDT (UD tape) de 400g/m$^2$ : ce type de renfort est un quasi UD (fibres unidirectionnelles) puisque 90% des fibres sont dans le sens trame.

L'ensemble est chauffé par infra-rouge pour fixer la poudre.

Le taux de poudre est de 30% en poids (soit 50% en volume).

Le préimprégnés ainsi obtenu est découpé en formats de 300*200mm et 4 de ces formats sont superposés pour constituer une préforme qui sera ensuite consolidée sous presse CARVER à 330°C pendant 15mn puis refroidie et démoulée à 100°C.

Des éprouvettes de flexion sont prélevées dans le sens minoritaire des fibres (orientation 90°) testées selon la norme 14125(1998).

Les résultats sont donnés dans le tableau I ci-dessous. La valeur de contrainte à rupture de 40 MPa en flexion obtenue avec la masse de 10500 est considérée comme insuffisante pour se prémunir de la présence d'une micro fissuration prématurée du composite au niveau de l'interface fibres & résine, lors d'un chargement mécanique ou thermique.

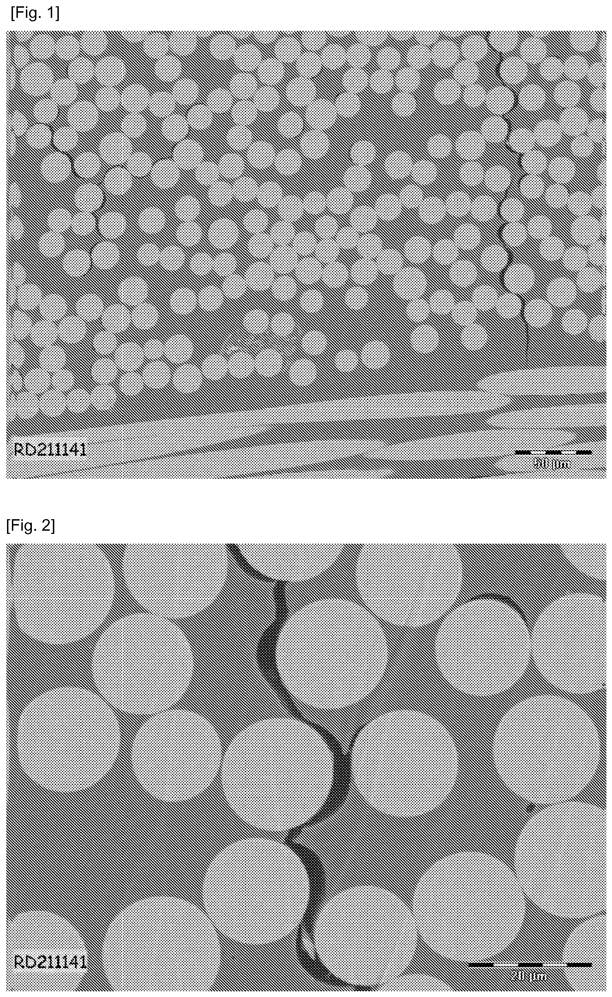

Ce résultat est obtenu malgré une imprégnation parfaite des fibres mais on peut constater la présence de microfissures dans la plaques (voir figure 1), qui apparaissent au refroidissement sous l'effet de contraintes thermiques et affectent la résistance du composite obtenu : dans ce cas, on conclue que le polymère utilisé présente une masse moléculaire insuffisante.

Exemple n°2 (exemple comparatif) :

Imprégnation d'un matériau fibreux par un PA de type 11/10T/6T, de Tg 110°C de masse Mn=27200g/mol, de viscosité en fondu (rhéologie plan-plan sous 1 Hz et 2% de déformation) de 1790 Pa.s à 330°C selon l'exemple 1.

La nature du renfort fibreux, le procédé de fabrication du pré-imprégné, de la plaque composite et le protocole de test mécaniques sont identiques à ceux de l'exemple 1.

Le résultat obtenu, en flexion transverse (90°) selon ISO 14125(1998). est présenté dans le tableau I : il est proche de celui obtenu avec le polymère de faible masse de l'exemple n°1 : cela atteste cette fois que la masse du polymère est trop importante et empêche une bonne imprégnation des fibres, ce qui s'observe (cf figure 2) par la présence de zones sèches dépourvues de résine dans la plaque consolidée.

Le polymère étant de trop forte Mn, il est donc trop visqueux et son imprégnation conduit donc à des zones sèches.

Exemple 3 :

Imprégnation d'un matériau fibreux avec un PA de type 11/10T/6T, de Tg 110°C de masse Mn=13700g/mol, de viscosité en fondu (rhéologie plan-plan, sous 1 Hz et 2% de déformation à Tg + 220°C) est de 185 Pa.s à 330°C.

La nature du renfort fibreux, le procédé de fabrication du pré-imprégné, de la plaque composite et le protocole de test mécaniques sont identiques à ceux de l'exemple 1.

On voit une nette amélioration des propriétés mécaniques transverses (90°) selon ISO 14125(1998). lorsque la masse moléculaire de la résine passe de 10500 à 13700.

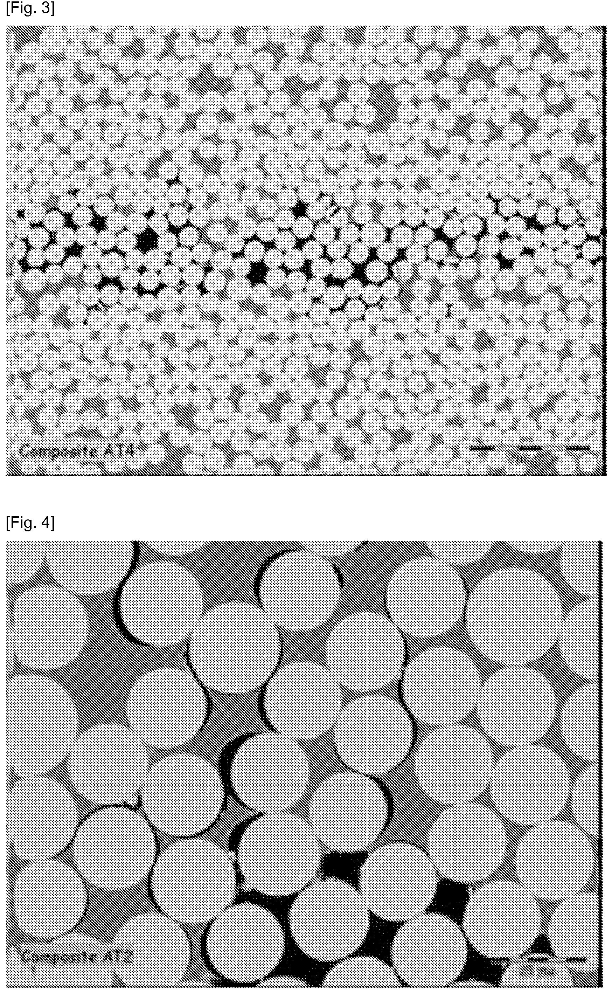

La morphologie des plaques (cf figure 3) montre que contrairement aux exemples comparatifs n°1 et 2, aucune micro fissure ni zone sèche ne sont présente dans la plaque attestant que la masse moléculaire du polymère est optimale.

Exemple n°4

Imprégnation d'un matériau fibreux avec un PA de type MPMDT/10T (67/33 %molaire) de D50 = 115$\mu$m présentant une Tg de 125°C. Sa masse est de 14000 g/mol (mesure par RMN) et sa viscosité en fondu (rhéologie plan-plan, sous 1 Hz et 2% de déformation à Tg + 220°C) est de 214 Pa.s à 345°C.

Ce polymère est broyé en poudre d'un diamètre moyen D50=115 $\mu$m. La poudre est additivée en dry blend avec un agent stabilisant thermique, puis déposée selon l'exemple 1 à la surface d'un renfort fibre de verre Advantex de 3B, SE4535 tissé sous forme d'un UDT (90% des fibres sont selon le sens trame et 10% en sens chaine) de 400g/m2. Le taux de poudre est de 30% en poids (soit 50% en volume).

Le pré-imprégnés ainsi obtenu est découpé en formats de 300*200mm et 4 de ces formats sont superposés pour constituer une préforme qui sera ensuite consolidée sous presse CARVER à 345°C pendant 15mn puis refroidie et démoulée à 100°C.

Des éprouvettes de flexion sont prélevées dans le sens majoritaire des fibres (sens trame), testées selon la norme ISO 14125(1998).

Les résultats sont donnés dans le tableau I ci-dessous.

On constate que le compromis masse moléculaire viscosité en fondu est satisfaisant.

Exemple 5 :

Imprégnation d'un matériau fibreux avec un PA de type BACT/10T présentant une Tg de 140°C. Sa masse est de 19100 g/mol (mesure par RMN) et sa viscosité en fondu (rhéologie plan-plan, sous 1 Hz et 2% de déformation à Tg + 220°C) est de 502 Pa.s à 360°C.

Ce polymère est broyé en poudre d'un diamètre moyen DN50=110 $\mu$m. La poudre est additivée en dry blend avec un agent stabilisant thermique, puis déposée selon l'exemple 1 à la surface d'un renfort fibre de verre Advantex de 3B, SE4535 tissé sous forme d'un UDT (90% des fibres sont selon le sens trame et 10% en sens chaine) de 400g/m$^2$. Le taux de poudre est de 30% en poids (soit 50% en volume).

Le pré-imprégnés ainsi obtenu est découpé en formats de 300*200mm et 4 de ces formats sont superposés pour constituer une préforme qui sera ensuite consolidée sous presse CARVER à 360°C pendant 15mn puis refroidie et démoulée à 100°C.

Des éprouvettes de flexion sont prélevées dans le sens majoritaire des fibres (sens trame), testées selon la norme ISO 14125(1998).

Les résultats sont donnés dans le tableau I ci-dessous.

On constate que le compromis masse moléculaire viscosité en fondu est satisfaisant.

Exemple 6 :

Le polymère est un MXD10 de masse 15 000 g/mol. Sa Tg est de 70°C, sa viscosité à 290°C est de 110 Pa.s

Le procédé de fabrication de la plaque composite est un procédé de pultrusion avec une imprégnation par voie fondue avec une filière en tête d'équerre. Le polymère est introduit sous forme de granulés, préalablement compoundés avec un agent stabilisant thermiquement, dans une extrudeuse qui alimente la tête d'équerre.

La température à laquelle les fibres ont été imprégnées était de 290°C.

La vitesse de la ligne était de 1,1 m/mn pb / gamme de vitesse revendiquée

La fibre utilisée est la fibre de verre Hypertex de 3B SE4535

Le taux de fibre était de 60% en volume.

On obtient d'excellentes propriétés mécaniques, mesurée en flexion selon la norme ISO 14125(1998). Elles sont résumées dans le tableau I ci-dessous :

Dans cette exemple, contrairement aux autres exemples, aucune rupture n'est observée en flexion transverse, jusqu'à 10% de déformation, valeur au-delà de laquelle l'essai est interrompu car il sort alors des conditions préconisées par la norme ISO 14125. Dans ce cas, l'excellence des propriétés mécaniques transverses se juge par la ductilité du composite obtenu (cad la valeur de la déformation atteinte perpendiculairement aux fibres (direction 90°)), ce qui atteste d'un bon compromis entre viscosité en fondu et masse moléculaire.

[Tableau 1]

| N° exemple | Mn | Tg (°C) | Viscosité en fondu (Pa.s) à Tg +220°C | Module 90° (GPa) | Contrainte 90°(MPa) |
|---|---|---|---|---|---|
| 1 | 10500 | 110 | 70 | 7,7 | 41 |
| 2 | 27200 | 110 | 1790 | 3,6 | 46 |
| 3 | 13700 | 110 | 185 | 10,2 | 79 |
| 4 | 14000 | 125 | 214 | 9,2 | 75 |
| 5 | 19100 | 140 | 502 | 10,3 | 82 |
| 6 | 15000 | 70 | 110 | 5,8 | 47** |
| **: pas de rupture observée en flexion transverse jusqu'à 10% de déformation. | | | | | |

Tous les exemples 1 à 5, ont conduit à de la rupture.

L'exemple 6 correspond donc à un matériau qui se déforme beaucoup sans rompre.

**Exemple 7 : Détermination du taux de porosité l'écart relatif entre densité théorique et densité expérimentale (méthode générale)**

a) Les données requises sont :

- La densité de la matrice thermoplastique
- La densité des fibres
- Le grammage du renfort :
  masse linéique (g/m) par exemple pour une bande ¼ de pouce (issu d'un seul rowing) masse surfacique (g/m$^2$) par exemple pour une bande plus large ou un tissu

b) Mesures à réaliser :

Le nombre d'échantillons doit être au minimum de 30 pour que le résultat soit représentatif du matériau étudié.

Les mesures à réaliser sont :

- La dimension des échantillons prélevés:

  Longueur (si masse linéique connue).
  Longueur et largeur (si masse surfacique connue).

- La densité expérimentale des échantillons prélevés :
  Mesures de masse dans l'air et dans l'eau.
- La mesure du taux de fibres est déterminée selon ISO 1172 :1999 ou par analyse thermogravimétrique (ATG) telle que déterminé par exemple dans le document B. Benzler, Applikationslabor, Mettler Toledo, Giesen, UserCom 1/2001.

La mesure du taux de fibres de carbone peut être déterminée selon ISO 14127 :2008.

Détermination du taux de fibres massique théorique :

a) Détermination du taux de fibres massique théorique :

$$\%Mf_{th} = \frac{m_l . L}{Me_{air}}$$

Avec

$m_l$ la masse linéique de la tape,
$L$ la longueur de l'échantillon et
$Me_{air}$ la masse de l'échantillon mesuré dans l'air.

La variation du taux massique de fibres est supposée être directement liée à une variation du taux de matrice sans prendre en compte la variation de la quantité des fibres dans le renfort.

b) Détermination de la densité théorique :

$$d_{th} = \frac{1}{\frac{1 - \%Mf_{th}}{d_m} + \frac{\%Mf_{th}}{d_f}}$$

Avec $d_m$ et $d_f$ les densités respectives de la matrice et des fibres.

La densité théorique ainsi calculée est la densité accessible s'il n'y a aucune porosité dans les échantillons.

c) Evaluation de la porosité :

La porosité est alors l'écart relatif entre densité théorique et densité expérimentale.

## Revendications

1. Matériau fibreux imprégné comprenant au moins un matériau fibreux en fibres continues se présentant sous forme d'une mèche ou de plusieurs mèches parallèles et au moins une matrice de polymère thermoplastique, **caractérisé en ce que** ledit au moins polymère thermoplastique est un polymère amorphe ou semi-cristallin dont la température de transition vitreuse est telle que Tg ≥ 40°C, notamment Tg ≥ 100°C, en particulier ≥ 120°C, telle que mesurée à l'aide d'un calorimètre différentiel à balayage (DSC), après un deuxième passage en chauffe, suivant la norme ISO 11357-2:2013 avec une vitesse de chauffage et de refroidissement de 20°C/min,
le taux de fibres dans ledit matériau fibreux imprégné étant compris de 45 à 65 % en volume, de préférence de 50 à 60% en volume, notamment de 54 à 60% en volume, la masse moléculaire moyenne en nombre Mn dudit polymère thermoplastique étant comprise de 11000 à 25000 g/mol, la viscosité à l'état fondu dudit polymère thermoplastique étant comprise de 80 à 1500 Pa.s, telle que mesurée en rhéologie plan-plan sous 1 Hz et 2% de déformation, à une température de Tg + 220°C.

2. Matériau fibreux imprégné selon la revendication 1, **caractérisé en ce que** l'indice de poly-molécularité Ip dudit polymère thermoplastique est compris de 2 à 6, en particulier de 2 à 3,5, notamment de 2,5 à 3,5.

3. Matériau fibreux imprégné selon la revendication 1 ou 2, **caractérisé en ce que** ledit au moins polymère thermoplastique est sélectionné parmi : les polyaryl éther cétones (PAEK), en particulier le poly(éther éther cétone) (PEEK) ; les polyaryl éther cétone cétone (PAEKK), en particulier le poly(éther cétone cétone) (PEKK) ; les polyéther-imides (PEI) aromatiques ; les polyaryl sulfones, en particulier les polyphénylène sulfones (PPSU) ; les polyarylsulfures, en particulier les polyphénylène sulfures (PPS) ; les polyamides (PA), en particulier polyamides semi-aromatiques (polyphthalamides) éventuellement modifiées par unités urées ; les PEBA, les polyacrylates en particulier le polyméthacrylate de méthyle (PMMA) ; les polyoléfines, l'acide polylactique (PLA), l'alcool polyvinylique (PVA), et les polymères fluorés en particulier le polytetrafluoroéthylène (PTFE) ou le polychlorotrifluoroéthylène (PCTFE); et leurs mélanges, notamment un mélange de PEKK et de PEI, de préférence de 90-10% en poids à 60-40% en poids, en particulier de 90-10% en poids à 70-30% en poids.

4. Matériau fibreux imprégné selon la revendication 1 à 3, **caractérisé en ce que** la masse moléculaire moyenne en nombre Mn dudit polymère thermoplastique est comprise de 14000 à 25000 et de préférence 15000 à 21000 et la viscosité à l'état fondu dudit polymère thermoplastique est comprise de 150 à 1500 Pa.s et de préférence de 200 à 750 Pa.s à une température de Tg + 220 °C et ledit polymère thermoplastique est un polymère de Tg ≥130°C.

5. Matériau fibreux imprégné selon la revendication 4, **caractérisé en ce que** ledit au moins polymère thermoplastique est un polyamide, en particulier stabilisé thermiquement.

6. Matériau fibreux imprégné selon la revendication 5, **caractérisé en ce que** ledit polyamide est choisi parmi les polyamides semi-aromatiques.

7. Matériau fibreux selon la revendication 6, **caractérisé en ce que** ledit polyamide semi-aromatique est modifié par des unités urées et choisi parmi ur polyamide semi-aromatique de formule X/YAr, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques;
X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18, notamment un polyamide de formule A/6T, A/9T, A/10T ou A/11T, A étant tel que défini ci-dessus, en particulier un polyamide PA 6/6T, un PA 66/6T, un PA 6I/6T, un PA MXDT/6T, un PA MPMDT/6T, un PA PA11/10T, un PA 11/6T/10T, un PA MXDT/10T, un PA MPMDT/10T, un PA BACT/10T, un PA BACT/6T, un PA 11/BACT, un PA BACT/10T/6T, un PA 11/BACT/6T, PA 11/MPMDT/6T, un PA 11/BACT/10T, un PA 11/MXDT/10T, un PA 11/MXDT/6T.

8. Matériau fibreux imprégné selon la revendication 6 ou 7, **caractérisée en ce que** ledit polyamide semi-aromatique est choisi parmi un PA MXDT/6T, un PA MPMDT/6T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, un PA 11/MPMDT/6T, PA 11/BACT/10T, un PA 11/MXDT/10T, un PA 11/MXDT/6T.

9. Matériau fibreux imprégné selon la revendication 1 à 3, **caractérisé en ce que** la masse moléculaire moyenne en nombre Mn dudit polymère thermoplastique est comprise de 11000 à 20000 g/mol et de préférence 12000 à 18000, la viscosité à l'état fondu dudit polymère thermoplastique est comprise de 80 à 650 Pa.s et de préférence 100 à 450 Pa.s à une température de Tg + 220 °C et ledit polymère thermoplastique est un polyamide de Tg < 130°C.

10. Matériau fibreux imprégné selon la revendication 9, **caractérisé en ce que** ledit polyamide de Tg < 130°C est choisi parmi les polyamides aliphatiques, les polyamides cycloaliphatiques et les polyamides semi-aromatiques de Tg inférieure à 130°C, en particulier les polyamides aliphatiques et les polyamides cycloaliphatiques.

11. Matériau fibreux imprégné selon la revendication 10, **caractérisé en ce que** ledit polyamide aliphatique est choisi parmi le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), le polyamide 11/1010, le polyamide 12/1010, ou un mélange de ceux-ci ou un copolyamide de ceux-ci, et les copolymères blocs, notamment polyamide/polyéther (PEBA) et les polyamides semi-aromatiques sont choisis parmi MXD10, MXD6, PA 6/6T, un PA 66/6T, un PA 6I/6T, MPMDT/10T, 11/MPMDT/10T, MPMDT/6T, un PA BACT/10T, un PA 11/BACT/10T, un MXDT/10 et un PA 11/MXDT/10T.

12. Matériau fibreux imprégné selon l'une des revendications 1 à 11, **caractérisé en ce que** le nombre de fibres dans ledit matériau fibreux pour des fibres de carbone est supérieur ou égal à est supérieur ou égal à 3K, en particulier supérieur ou égal à 6K, notamment supérieur ou égal à 12K, en particulier choisi parmi 12K, 24K, 48K, 50K et 400K, notamment 12K, 24K, 48K et 50K ou le grammage pour la fibre de verre est supérieur ou égal à 1200 Tex, notamment supérieur ou égal à 2400 Tex, supérieur ou égal à 4800 Tex.

13. Matériau fibreux imprégné selon l'une des revendications 1 à 12, **caractérisé en ce que** les fibres du matériau fibreux sont non ensimées.

14. Matériau fibreux imprégné selon l'une des revendications 1 à 13, **caractérisé en ce que** le taux de fibres en volume est constant dans au moins 70% du volume du matériau fibreux imprégné, notamment dans au moins 80% du volume du matériau fibreux imprégné, en particulier dans au moins 90% du volume du matériau fibreux imprégné, plus particulièrement dans au moins 95% du volume du matériau fibreux imprégné.

15. Matériau fibreux imprégné selon l'une des revendications 1 à 14, **caractérisé en ce que** le taux de porosité dans ledit matériau fibreux imprégné est inférieur à 10%, notamment inférieur à 5%, en particulier inférieur à 2%, ledit taux de porosité correspond au taux de porosité fermée et est déterminé comme étant l'écart relatif entre la densité théorique et la densité expérimentale dudit matériau fibreux imprégné tel que décrit dans la partie exemples de la description.

16. Matériau fibreux imprégné selon l'une des revendications 1 à 15, **caractérisé en ce que** ledit matériau fibreux imprégné est monocouche.

17. Matériau fibreux imprégné selon l'une des revendications 1 à 16, **caractérisé en ce que** ledit matériau fibreux comprend des fibres continues sélectionnées parmi les fibres de carbone, de verre, de carbure de silicium, de basalte, de silice, les fibres naturelles en particulier de lin ou de chanvre, de lignine, de bambou, de sisal, de soie, ou cellulosiques en particulier de viscose, ou les fibres thermoplastiques amorphes de température de transition vitreuse Tg supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou les fibres thermoplastiques semi-cristallines de température de fusion Tf supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou un mélange de deux ou de plusieurs desdites fibres, de préférence un mélange de fibres de carbone, de verre ou de carbure de silicium, en particulier des fibres de carbone.

18. Matériau fibreux imprégné selon l'une des revendications 1 à 17, **caractérisé en ce que** ledit polymère thermoplastique comprend en outre des charges carbonées, en particulier du noir de carbone ou des nanocharges carbonées, de préférence choisies parmi des graphènes, des nanotubes de carbone, des nanofibrilles de carbone ou leurs mélanges.

19. Matériau fibreux imprégné selon l'une des revendications 1 à 18, **caractérisé en ce que** le dit prépolymère thermoplastique comprend en outre des polymères à cristaux liquides ou du poly(butylène téréphtalate) cyclisé, ou des mélanges contenant lesdits polymères à cristaux liquides ou ledit poly(butylène téréphtalate) cyclisé en tant qu'additifs.

20. Matériau fibreux imprégné selon l'une des revendications 1 à 19, **caractérisé en ce que** le ledit matériau fibreux imprégné est non flexible, c'est-à-dire qu'il ne peut épouser une forme complexe à température ambiante et qu'il ne peut le faire qu'au-delà de la Tf de la résine.

21. Procédé de préparation d'un matériau fibreux imprégné tel que défini dans l'une des revendications 1 à 20, **caractérisé en ce qu'**il comprend une étape de pré-imprégnation ou une étape d'imprégnation dudit matériau fibreux par au moins polymère thermoplastique étant un polymère amorphe ou semi-cristallin dont la température de transition vitreuse est telle que Tg $\geq$ 40°C, notamment Tg $\geq$ 100°C, en particulier $\geq$ 120°C, le taux de fibres dans ledit matériau fibreux imprégné étant compris de 45 à 65 % en volume, de préférence de 50 à 60% en volume, notamment de 54 à 60% en volume, la masse moléculaire moyenne en nombre Mn dudit polymère thermoplastique étant comprise de 11000 à 25000 g/mol, la viscosité à l'état fondu dudit polymère thermoplastique étant comprise de 80 à 1500 Pa.s, telle que mesurée en rhéologie plan-plan sous 1 Hz et 2% de déformation, à une température de Tg + 220°C.

22. Procédé de préparation d'un matériau fibreux imprégné selon la revendication 21, **caractérisé en ce que** il comprend une étape d'imprégnation dudit matériau fibreux par au moins polymère thermoplastique, la masse moléculaire moyenne en nombre Mn dudit polymère thermoplastique étant comprise de 11000 à 20000 g/mol et de préférence 12000 à 18000, la viscosité à l'état fondu dudit polymère thermoplastique est comprise de 80 à 650 Pa.s et de préférence 100 à 450 Pa.s à une température de Tg + 220 °C et ledit polymère thermoplastique étant un polyamide de Tg < 130°C.

23. Procédé selon la revendication 22, **caractérisé en ce que** ladite étape d'imprégnation est effectuée par voie fondue, notamment à grande vitesse, en particulier à une vitesse d'au moins 1 à 10 m/min pour la voie fondue, en particulier d'au moins 2 m/min.

24. Procédé selon la revendication 22 ou 23, **caractérisé en ce qu'**il comprend les étapes suivantes :

i) imprégnation d'un matériau fibreux par au moins un polymère thermoplastique non réactif par voie fondue, notamment par pultrusion, par extrusion en tête d'équerre de polymère fondu, pour obtenir un matériau fibreux imprégné, ladite étape de pré-imprégnation étant effectuée par au moins polymère thermoplastique de masse moléculaire moyenne en nombre Mn dudit polymère thermoplastique étant comprise de 11000 à 20000 g/mol et de préférence 12000 à 18000, la viscosité à l'état fondu dudit polymère thermoplastique est comprise de 80 à 650 Pa.s et de préférence 100 à 450 Pa.s à une température de Tg + 220 °C et ledit polymère thermoplastique étant un polyamide de Tg < 130°C
i) optionnellement étape de mise en forme et de calibration dudit matériau fibreux imprégné pour obtenir un matériau fibreux imprégné constitué d'un ruban sous forme de bande mince d'une épaisseur de 0,2 à 5 mm et de préférence 0,2 à 1,3 mm d'épaisseur.

25. Procédé de préparation d'un matériau fibreux imprégné selon la revendication 21, **caractérisé en ce qu'**il comprend une étape de pré-imprégnation dudit matériau fibreux se présentant sous forme d'une mèche ou de plusieurs mèches parallèles par au moins un polymère thermoplastique non réactif, la masse moléculaire moyenne en nombre Mn dudit polymère thermoplastique est comprise de 14000 à 25000 et de préférence 15000 à 21000 et la viscosité à l'état fondu dudit polymère thermoplastique est comprise de 150 à 1500 Pa.s et de préférence de 200 à 750 Pa.s à une température de Tg + 220 °C et ledit polymère thermoplastique est un polymère de Tg ≥130°C.

26. Procédé selon la revendication 25, **caractérisé en ce que** ladite pré-imprégnation est effectuée avec un système choisi parmi un lit fluidisé, une pulvérisation par pistolet, par passage en continu des fibres dans une dispersion aqueuse de poudre dudit polymère thermoplastique non réactif ou dispersion aqueuse de particules dudit polymère thermoplastique ou émulsion ou suspension aqueuse dudit polymère thermoplastique non réactif, notamment à grande vitesse.

27. Procédé selon la revendication 25 ou 26, **caractérisé en ce qu'**il comprend au moins une étape de chauffage sans embarrage dudit matériau fibreux pré-imprégné.

28. Procédé selon la revendication 25 ou 26, **caractérisé en ce qu'**il comprend au moins une étape de chauffage effectuée au moyen d'au moins une pièce d'embarrage (E) et d'au moins un système de chauffage, ladite mèche ou lesdites mèches étant en contact avec une partie ou la totalité de la surface de ladite au moins une pièce d'embarrage (E) et défilant partiellement ou totalement à la surface de ladite au moins une pièce d'embarrage (E) au niveau du système de chauffage.

29. Procédé selon l'une des revendications 27 à 28, **caractérisé en ce que** le système de chauffage est choisi parmi une lampe infra rouge, une lampe UV, un chauffage par convection, un chauffage micro-onde, un chauffage laser et un chauffage Hautes Fréquences (HF).

30. Procédé selon l'une des revendications 25 à 29, **caractérisé en ce qu'**il comprend les étapes suivantes :

i) Pré-imprégnation d'un matériau fibreux par au moins un polymère thermoplastique non réactif par lit fluidisé dans une cuve, équipée ou non d'au moins un embarrage (E'), par pulvérisation par buse ou pistolet par voie sèche dans une cuve, équipée ou non d'au moins un embarrage (E') pour obtenir un matériau fibreux pré-imprégné, ladite étape de pré-imprégnation étant effectuée par au moins un polymère thermoplastique non réactif, la masse moléculaire moyenne en nombre Mn dudit polymère thermoplastique est comprise de 14000 à 25000 et de préférence 15000 à 21000 et la viscosité à l'état fondu dudit polymère thermoplastique est comprise de 150 à 1500 Pa.s et de préférence de 200 à 750 Pa.s à une température de Tg + 220 °C et ledit polymère thermoplastique est un polymère de Tg ≥130°C,
ii) étape de chauffage sans embarrage dudit matériau fibreux pré-imprégné pour obtenir un matériau fibreux pré-imprégné,
iii) étape de chauffage effectuée au moyen d'au moins une pièce d'embarrage (E) et d'au moins un système de chauffage, tels que définis dans la revendication 28 ou 29 pour obtenir un matériau fibreux imprégné,
iv) optionnellement étape de mise en forme et de calibration de la mèche ou desdites mèches parallèles dudit matériau fibreux imprégné pour obtenir un matériau fibreux imprégné constitué d'un ruban sous forme de bande

**EP 3 898 786 B1**

mince.

**31.** Procédé selon l'une des revendications 25 à 29, **caractérisé en ce qu'**il comprend les étapes suivantes :

i) Pré-imprégnation d'un matériau fibreux par au moins un polymère thermoplastique non réactif, notamment par passage en continu des fibres dans un lit fluide de poudre polymère sèche, une dispersion aqueuse de poudre polymère ou dispersion aqueuse de particules de polymère ou émulsion ou suspension aqueuse de polymère, ladite étape de pré-imprégnation étant effectuée par au moins polymère thermoplastique et ledit polymère thermoplastique est un polymère de Tg ≥130°C, ledit polymère thermoplastique non réactif présentant une masse moléculaire moyenne en nombre Mn dudit polymère thermoplastique étant comprise de 14000 à 25000 et de préférence 15000 à 21000 et la viscosité à l'état fondu dudit polymère thermoplastique est comprise de 150 à 1500 Pa.s et de préférence de 200 à 750 Pa.s, telle que mesurée en rhéologie plan-plan sous 1 Hz et 2% de déformation, à une température de Tg + 220°C,

ii) étape de chauffage sans embarrage dudit matériau fibreux pré-imprégné pour obtenir un matériau fibreux imprégné,

iii) optionnellement étape de chauffage effectuée au moyen d'au moins une pièce d'embarrage (E) et d'au moins un système de chauffage pour obtenir un matériau fibreux imprégné,

iv) optionnellement étape de mise en forme et de calibration de la mèche ou desdites mèches parallèles dudit matériau fibreux imprégné pour obtenir un matériau fibreux imprégné constitué d'un ruban sous forme de bande mince.

**32.** Procédé selon l'une des revendications 21 à 31, **caractérisé en ce qu'**un ou plusieurs embarrage(s) (E") est(sont) présent(s) en amont dudit système.

**33.** Procédé selon l'une des revendications 25 à 32, **caractérisé en ce qu'**il est effectué pour la voie poudre sèche à une vitesse comprise de 5 à 30 m/mn et pour la dispersion aqueuse à une vitesse d'au moins 15 m/min.

**34.** Utilisation d'un matériau fibreux imprégné, tel que défini dans l'une des revendications 1 à 20, pour la préparation de rubans adaptés à la fabrication de pièces composites en trois dimensions, par dépose automatique desdits rubans au moyen d'un robot.

**35.** Utilisation d'un matériau fibreux imprégné, tel que défini dans l'une des revendications 1 à 20, pour la préparation de feuilles thermoformables.

**36.** Utilisation selon la revendication 35, **caractérisée en ce que** le matériau fibreux imprégné est prédécoupé en morceaux, lesdits morceaux étant associés au hasard ou orientés pour la préparation de la feuille thermoformable.

**37.** Utilisation d'au moins un polymère thermoplastique non réactif, ledit au moins un polymère thermoplastique non réactif étant un polymère thermoplastique amorphe ou semi-cristallin dont la température de transition vitreuse est telle que Tg ≥ 40°C, notamment Tg ≥ 100°C, en particulier ≥ 120°C, le taux de fibres dans ledit matériau fibreux imprégné étant compris de 45 à 65 % en volume, de préférence de 50 à 60% en volume, notamment de 54 à 60% en volume, la masse moléculaire moyenne en nombre Mn dudit polymère thermoplastique étant comprise de 11000 à 25000 g/mol, la viscosité à l'état fondu dudit polymère thermoplastique étant comprise de 80 à 1500 Pa.s, telle que mesurée en rhéologie plan-plan sous 1 Hz et 2% de déformation, à une température de Tg + 220°C, tel que défini dans l'une des revendications 1 à 11 et 18 à 19, pour imprégner un matériau fibreux.

**Patentansprüche**

**1.** Faseriges imprägniertes Material, das mindestens ein faseriges Material aus Endlosfasern umfasst, die in Form eines Bündels oder mehrerer paralleler Bündel vorliegen, und mindestens eine Matrix aus thermoplastischem Polymer, **dadurch gekennzeichnet, dass** das mindestens eine thermoplastische Polymer ein amorphes oder teilkristallines Polymer ist, dessen Glasübergangstemperatur derart ist, dass bei Ermittlung mithilfe der dynamischen Differenzkalorimetrie (DSC) nach einem zweiten Heizlauf gemäß ISO-Norm 11357-2:2013 mit einer Aufheiz- und Abkühlgeschwindigkeit von 20°C/min Tg ≥ 40°C, vor allem Tg ≥ 100°C, insbesondere ≥ 120°C beträgt, der Fasergehalt in dem faserigen imprägnierten Material von 45 bis 65 Volumen-%, vorzugsweise von 50 bis 60 Volumen-%, insbesondere 54 bis 60 Volumen-% beträgt, die zahlenmittlere Molmasse Mn des thermoplastischen Polymers von 11.000 bis 25.000 g/mol beträgt, die Schmelzviskosität des thermoplastischen Polymers, ermittelt mittels Platte-Platte-Rheologie bei 1 Hz und 2% Verformung, bei einer Temperatur Tg von + 220°C, von 80 bis 1500 Pa.s beträgt.

2. Faseriges imprägniertes Material nach Anspruch 1, **dadurch gekennzeichnet, dass** der Polydispersitätsindex Ip des thermoplastischen Polymers von 2 bis 6, insbesondere von 2 bis 3,5, vor allem von 2,5 bis 3,5 beträgt.

3. Faseriges imprägniertes Material nach Anspruch 1 oder 2, **dadurch gekennzeichnet, dass** das mindestens eine thermoplastische Polymer ausgewählt ist aus: Polyaryletherketonen (PAEK), insbesondere Polyetheretherketon (PEEK); Polyaryletherketonketon (PAEKK), insbesondere Polyetherketonketon (PEKK); aromatischen Polyetherimiden (PEI); Polyarylsulfonen, insbesondere Polyphenylensulfonen (PPSU); Polyarylsulfiden, insbesondere Polyphenylensulfiden (PPS); Polyamiden (PA), insbesondere teilaromatischen Polyamiden (Polyphthalamiden), gegebenenfalls modifiziert mit Harnstoffeinheiten; PEBA, Polyacrylaten, insbesondere Polymethylmethacrylat (PMMA); Polyolefinen, Polymilchsäure (PLA), Polyvinylalkohol (PVA) und Fluorpolymere, insbesondere Polytetrafluorethylen (P TmE) oder Polychlortrifluorethylen (PC TmE) und ihren Mischungen, vor allem einer Mischung aus PEKK und PEI von vorzugsweise 90 bis 10 Gewichts-% bis 60 bis 40 Gewichts-%, insbesondere von 90 bis 10 Gewicht-% bis 70 bis 30 Gewichts-%.

4. Faseriges imprägniertes Material nach Anspruch 1 bis 3, **dadurch gekennzeichnet, dass** die zahlenmittlere Molmasse Mn des thermoplastischen Polymers von 14.000 bis 25.000 und vorzugsweise 15.000 bis 21.000 beträgt und die Schmelzviskosität des thermoplastischen Polymers von 150 bis 1500 Pa.s und vorzugsweise von 200 bis 750 Pa.s bei einer Temperatur Tg + 220 °C beträgt und das thermoplastische Polymer ein Polymer mit einer Tg ≥130°C ist.

5. Faseriges imprägniertes Material nach Anspruch 4, **dadurch gekennzeichnet, dass** das mindestens eine thermoplastische Polymer ein, insbesondere thermisch stabiliertes, Polyamid ist.

6. Faseriges imprägniertes Material nach Anspruch 5, **dadurch gekennzeichnet, dass** das Polyamid aus teilaromatischen Polyamiden ausgewählt ist.

7. Faseriges Material nach Anspruch 6, **dadurch gekennzeichnet, dass** das teilaromatische Polyamid mit Harnstoffeinheiten modifiziert ist und ausgewählt ist aus einem teilaromatischen Polyamid mit der Formel X/YAr, vor allem einem teilaromatischen Polyamid mit der Formel A/XT, in der A ausgewählt ist aus einem Motiv, das aus einer Aminosäure erhalten wird, einem Motiv, das aus einem Lactam erhalten wird, und einem Motiv, das der Formel (Ca-Diamin). (Cb-Dicarbonsäure) entspricht, bei dem a die Anzahl Kohlenstoffatome im Diamin darstellt und b die Anzahl Kohlenstoffatome in der Dicarbonsäure darstellt, wobei a und b jeweils zwischen 4 und 36, vorteilhafterweise zwischen 9 und 18 betragen, wobei das Motiv (Ca-Diamin) ausgewählt ist aus unverzweigten oder verzweigten aliphatischen Diaminen, cycloaliphatischen Diaminen und alkylaromatischen Diaminen und das Motiv (Cb-Dicarbonsäure) ausgewählt ist aus unverzweigten oder verzweigten aliphatischen Dicarbonsäuren, cycloaliphatischen Dicarbonsäuren und aromatischen Dicarbonsäuren;
X.T ein Motiv bezeichnet, das bei der Polykondensation eines Cx-Diamins und Terephthalsäure erhalten wird, wobei x die Anzahl Kohlenstoffatome des Cx-Diamins darstellt, x zwischen 6 und 36, vorteilhafterweise zwischen 9 und 18 beträgt, vor allem ein Polyamid mit der Formel A/6T, A/9T, A/10T oder A/11T, wobei A wie zuvor definiert ist, insbesondere ein Polyamid PA 6/6T, ein PA 66/6T, ein PA 6I/6T, ein PA MXDT/6T, ein PA MPMDT/6T, ein PA PA11/10T, ein PA 11/6T/10T, ein PA MXDT/10T, ein PA MPMDT/10T, ein PA BACT/10T, ein PA BACT/6T, ein PA 11/BACT, ein PA BACT/10T/6T, ein PA 11/BACT/6T, PA 11/MPMDT/6T, ein PA 11/BACT/10T, ein PA 11/MXDT/10T, ein PA 11/MXDT/6T.

8. Faseriges imprägniertes Material nach Anspruch 6 oder 7, **dadurch gekennzeichnet, dass** das teilaromatische Polyamid ausgewählt ist aus einem PA MXDT/6T, einem PA MPMDT/6T, einem PA 11/BACT, einem PA 11/6T/10T, einem PA MXDT/10T, einem PA MPMDT/10T, einem PA BACT/10T, einem PA BACT/6T, PA BACT/10T/6T, einem PA 11/BACT/6T, einem PA 11/MPMDT/6T, PA 11/BACT/10T, einem PA 11/MXDT/10T, einem PA 11/MXDT/6T.

9. Faseriges imprägniertes Material nach Anspruch 1 bis 3, **dadurch gekennzeichnet, dass** die zahlenmittlere Molmasse Mn des thermoplastischen Polymers von 11.000 bis 20.000 g/mol und vorzugsweise 12.000 bis 18.000 beträgt, die Schmelzviskosität des thermoplastischen Polymers von 80 bis 650 Pa.s und vorzugsweise 100 bis 450 Pa.s bei einer Temperatur Tg + 220 °C beträgt und das thermoplastische Polymer ein Polyamid mit einer Tg < 130°C ist.

10. Faseriges imprägniertes Material nach Anspruch 9, **dadurch gekennzeichnet, dass** das thermoplastische Polymer mit der Tg < 130°C ausgewählt ist aus aliphatischen Polyamiden, cycloaliphatischen Polyamiden und teilaromatischen Polyamiden mit einer Tg von unter 130°C, insbesondere aliphatischen Polyamiden und cycloaliphatischen Polyamiden.

11. Faseriges imprägniertes Material nach Anspruch 10, **dadurch gekennzeichnet, dass** das aliphatische Polymer ausgewählt ist aus Polyamid 6 (PA-6), Polyamid 11 (PA-11), Polyamid 12 (PA-12), Polyamid 66 (PA-66), Polyamid 46 (PA-46), Polyamid 610 (PA-610), Polyamid 612 (PA-612), Polyamid 1010 (PA-1010), Polyamid 1012 (PA-1012), Polyamid 11/1010, Polyamid 12/1010 oder einer Mischung daraus oder einem Copolyamid daraus und Blockcopolymeren, vor allem Polyamid/Polyether (PEBA), und die teilaromatischen Polyamide ausgewählt sind aus MXD10, MXD6, PA 6/6T, einem PA 66/6T, einem PA 6I/6T, MPMDT/10T, 11/MPMDT/10T, MPMDT/6T, einem PA BACT/10T, einem PA 11/BACT/10T, einem MXDT/10 und einem PA 11/MXDT/10T.

12. Faseriges imprägniertes Material nach einem der Ansprüche 1 bis 11, **dadurch gekennzeichnet, dass** die Faseranzahl in dem faserigen Material bei Kohlenstofffasern größer gleich 3K, insbesondere größer gleich 6K, vor allem größer gleich 12K beträgt, insbesondere ausgewählt ist aus 12K, 24K, 48K, 50K und 400K, vor allem 12K, 24K, 48K und 50K oder das Flächengewicht bei Glasfaser größer gleich 1200 Tex, vor allem größer gleich 2400 Tex, größer gleich 4800 Tex ist.

13. Faseriges imprägniertes Material nach einem der Ansprüche 1 bis 12, **dadurch gekennzeichnet, dass** die Fasern des faserigen Materials nicht geschlichtet sind.

14. Faseriges imprägniertes Material nach einem der Ansprüche 1 bis 13, **dadurch gekennzeichnet, dass** der volumenbezogene Fasergehalt in mindestens 70% des Volumens des faserigen imprägnierten Materials, vor allem in mindestens 80% des Volumens des faserigen imprägnierten Materials, insbesondere in mindestens 90% des Volumens des faserigen imprägnierten Materials, ganz besonders in mindestens 95% des Volumens des faserigen imprägnierten Materials gleichbleibend ist.

15. Faseriges imprägniertes Material nach einem der Ansprüche 1 bis 14, **dadurch gekennzeichnet, dass** die Porosität in dem faserigen imprägnierten Material unter 10%, vor allem unter 5%, insbesondere unter 2% beträgt, die Porosität der geschlossenen Porosität entspricht und als relativer Abstand zwischen der theoretischen Dichte und der experimentell ermittelten Dichte bestimmt ist, wie er im Abschnitt Beispiel in der Beschreibung beschrieben ist.

16. Faseriges imprägniertes Material nach einem der Ansprüche 1 bis 15, **dadurch gekennzeichnet, dass** das faserige imprägnierte Material einlagig ist.

17. Faseriges imprägniertes Material nach einem der Ansprüche 1 bis 16, **dadurch gekennzeichnet, dass** das faserige Material Endlosfasern umfasst, die ausgewählt sind aus Kohlenstoff-, Glas-, Siliziumcarbid-, Basalt-, Siliziumdioxidfasern, Naturfasern, insbesondere Leinen- oder Hanffasern, Lignin-, Bambus-, Sisal-, Seidenfasern oder Zellulosefasern, insbesondere Viskosefasern, oder amorphen thermoplastischen Fasern mit einer Glasübergangstemperatur Tg, die höher ist als die Tg des Polymers oder der Polymermischung, wenn letztere amorph ist, oder höher als die Tm des Polymers oder der Polymermischung, wenn letztere teilkristallin ist, oder teilkristallinen thermoplastischen Fasern mit einer Schmelztemperatur Tm, die höher ist als die Tg des Polymers oder der Polymermischung, wenn letztere amorph ist, oder höher als die Tm des Polymers oder der Polymermischung, wenn letztere teilkristallin ist, oder einer Mischung aus zwei oder mehr der Fasern, vorzugsweise einer Mischung aus Kohlenstoff-, Glas- oder Siliziuumcarbid fasern, insbesondere Kohlenstofffasern.

18. Faseriges imprägniertes Material nach einem der Ansprüche 1 bis 17, **dadurch gekennzeichnet, dass** das thermoplastische Polymer ferner kohlenstoffhaltige Füllstoffe umfasst, insbesondere technischen Ruß oder kohlenstoffhaltige Nanofüllstoffe, die vorzugsweise ausgewählt sind aus Graphenen, Kohlenstoffnanoröhrchen, Kohlenstoffnanofibrillen oder ihren Mischungen.

19. Faseriges imprägniertes Material nach einem der Ansprüche 1 bis 18, **dadurch gekennzeichnet, dass** das thermoplastische Präpolymer ferner Flüssigkristallpolymere oder cyclisiertes Polybutylenterephthalat oder Mischungen umfasst, die die Flüssigkristallpolymere oder das cyclisierte Polybutylenterephthalat als Zusätze enthalten.

20. Faseriges imprägniertes Material nach einem der Ansprüche 1 bis 19, **dadurch gekennzeichnet, dass** das faserige imprägnierte Material nicht flexibel ist, das heißt, dass es bei Umgebungstemperatur keine komplexe Form annehmen kann und dies nur bis oberhalb der Tm des Harzes möglich ist.

21. Verfahren zur Herstellung eines faserigen imprägnierten Materials nach einem der Ansprüche 1 bis 20, **dadurch gekennzeichnet, dass** es einen Schritt zum Vorimprägnieren oder einen Schritt zum Imprägnieren des faserigen Materials mit mindestens thermoplastischem Polymer umfasst, das ein amorphes oder teilkristallines Polymer ist, dessen Glasübergangstemperatur derart ist, dass Tg $\geq$ 40°C, vor allem Tg $\geq$ 100°C, insbesondere $\geq$ 120°C, wobei der Fasergehalt in dem faserigen imprägnierten Material von 45 bis 65 Volumen-%, vorzugsweise von 50 bis 60 Volumen-%, vor allem von 54 bis 60 Volumen-% beträgt, wobei die zahlenmittlere Molmasse Mn des thermoplastischen Polymers von 11.000 bis 25.000 g/mol beträgt, die Schmelzviskosität des thermoplastischen Polymers, ermittelt mittels Platte-Platte-Rheologie bei 1 Hz und 2% Verformung, bei einer Temperatur Tg von + 220°C, von 80 bis 1500 Pa.s beträgt.

22. Verfahren zur Herstellung eines faserigen imprägnierten Materials nach Anspruch 21, **dadurch gekennzeichnet, dass** es einen Schritt zum Imprägnieren des faserigen Materials mit mindestens thermoplastischem Polymer umfasst, wobei die zahlenmittlere Molmasse Mn des thermoplastischen Polymers von 11.000 bis 20.000 g/mol und vorzugsweise von 12.000 bis 18.000 beträgt, die Schmelzviskosität des thermoplastischen Polymers bei einer Temperatur Tg + 220 °C von 80 bis 650 Pa.s und vorzugsweise von 100 bis 450 Pa.s beträgt und das thermoplastische Polymer ein Polyamid mit einer Tg < 130°C ist.

23. Verfahren nach Anspruch 22, **dadurch gekennzeichnet, dass** der Schritt zum Imprägnieren im Schmelzverfahren erfolgt, vor allem mit hoher Geschwindigkeit, insbesondere einer Geschwindigkeit von mindestens 1 bis 10 m/min im Schmelzverfahren, insbesondere mindestens 2 m/min.

24. Verfahren nach Anspruch 22 oder 23, **dadurch gekennzeichnet, dass** es folgende Schritte umfasst:

   i) Imprägnieren eines faserigen Materials mit mindestens einem nicht reaktionsfähigen thermoplastischen Polymer im Schmelzverfahren, insbesondere mittels Strangziehen, mittels Extrusion von Polymerschmelze durch einen Winkelkopf, zum Erhalten eines faserigen imprägnierten Materials, wobei der Schritt zum Vorimprägnieren mit mindestens thermoplastischem Polymer mit einer zahlenmittleren Molmasse Mn des thermoplastischen Polymers von 11.000 bis 20.000 g/mol und vorzugsweise 12.000 bis 18.000 durchgeführt wird, die Schmelzviskosität des thermoplastischen Polymers bei einer Temperatur Tg + 220 °C von 80 bis 650 Pa.s und vorzugsweise 100 bis 450 Pa.s beträgt und das thermoplastische Polymer ein Polyamid mit einer Tg < 130°C ist, i) gegebenenfalls Schritt zum Formen des faserigen imprägnierten Materials und Bringen desselben auf ein genaues Maß zum Erhalten eines faserigen imprägnierten Materials, das aus einem Band in Form eines dünnen Streifens mit einer Dicke von 0,2 bis 5 mm und vorzugsweise einer Dicke von 0,2 bis 1,3 mm besteht.

25. Verfahren zur Herstellung eines faserigen imprägnierten Materials nach Anspruch 21, **dadurch gekennzeichnet, dass** es einen Schritt zum Vorimprägnieren des faserigen Materials, das in Form eines Bündels oder mehrerer paralleler Bündel vorliegt, mit mindestens einem nicht reaktionsfähigen thermoplastischen Polymer umfasst, wobei die zahlenmittlere Molmasse Mn des thermoplastischen Polymers von 14.000 bis 25.000 und vorzugsweise 15.000 bis 21.000 beträgt und die Schmelzviskosität des thermoplastischen Polymers bei einer Temperatur Tg + 220 °C von 150 bis 1500 Pa.s und vorzugsweise von 200 bis 750 Pa.s beträgt und das thermoplastische Polymer ein Polymer mit einer Tg $\geq$ 130°C ist.

26. Verfahren nach Anspruch 25, **dadurch gekennzeichnet, dass** das Vorimprägnieren mit einem System durchgeführt wird, das ausgewählt wird aus einem Wirbelbett, Aufsprühen mit Sprühpistole, kontinuierliches Leiten der Fasern durch eine wässrige Dispersion eines Pulvers des nicht reaktionsfähigen thermoplastischen Polymers oder eine wässrige Dispersion von Teilchen des thermoplastischen Polymers oder eine Emulsion oder wässrige Suspension des nicht reaktionsfähigen thermoplastischen Polymers, insbesondere mit hoher Geschwindigkeit.

27. Verfahren nach Anspruch 25 oder 26, **dadurch gekennzeichnet, dass** es mindestens einen Schritt zum Erwärmen des faserigen vorimprägnierten Materials ohne Haltevorrichtung umfasst.

28. Verfahren nach Anspruch 25 oder 26, **dadurch gekennzeichnet, dass** es mindestens einen Schritt zum Erwärmen umfasst, der mit mindestens einem Halteteil (E) und mit mindestens einem Heizsystem durchgeführt wird, wobei das Bündel oder die Bündel einen Teil der oder die gesamte Oberfläche des mindestens einen Halteteils (E) berührt bzw. berühren und sich teilweise oder vollständig an der Oberfläche des mindestens einen Halteteils (E) im Bereich des Heizsystems entlangbewegt bzw. entlangbewegen.

29. Verfahren nach einem der Ansprüche 27 bis 28, **dadurch gekennzeichnet, dass** das Heizsystem aus einer Infrarotlampe, einer UV-Lampe, einer Konvektionsheizung, einer Mikrowellenheizung, einer Laserheizung und einer Hochfrequenzheizung (HF) ausgewählt ist.

30. Verfahren nach einem der Ansprüche 25 bis 29, **dadurch gekennzeichnet, dass** es folgende Schritte umfasst:

i) Vorimprägnieren eines faserigen Materials mit mindestens einem nicht reaktionsfähigen thermoplastischen Polymer im Wirbelbett in einem Behälter, der mit mindestens einer Haltevorrichtung (E') ausgestattet oder nicht ausgestattet ist, durch Sprühen mittels Düse oder Sprühpistole als Trockenverfahren in einem Behälter, der mit mindestens einer Haltevorrichtung (E') ausgestattet oder nicht ausgestattet ist, damit ein faseriges vorimprägniertes Material erhalten wird, wobei der Schritt zum Vorimprägnieren mit mindestens einem nicht reaktionsfähigen thermoplastischen Polymer durchgeführt wird, wobei die zahlenmittlere Molmasse Mn des thermoplastischen Polymers von 14.000 bis 25.000 und vorzugsweise von 15.000 bis 21.000 beträgt und die Schmelzviskosität des thermoplastischen Polymers bei einer Temperatur Tg + 220 °C von 150 bis 1500 Pa.s und vorzugsweise von 200 bis 750 Pa.s beträgt und das thermoplastische Polymer ein Polymer mit einer Tg ≥130°C ist,
ii) Schritt zum Erwärmen ohne Halt des faserigen vorimprägnierten Materials zum Erhalten eines faserigen vorimprägnierten Materials,
iii) Schritt zum Erwärmen, der mit mindestens einem Halteteil (E) und mit mindestens einem Heizsystem durchgeführt wird, wie in Anspruch 28 oder 29 definiert ist, zum Erhalten eines faserigen imprägnierten Materials,
iv) gegebenenfalls Schritt zum Formen des Bündels oder der parallelen Bündel aus dem faserigen imprägnierten Material und Bringen desselben bzw. derselben auf Maß zum Erhalten eines faserigen imprägnierten Materials, das aus einem Band in Form eines dünnen Streifens besteht.

31. Verfahren nach einem der Ansprüche 25 bis 29, **dadurch gekennzeichnet, dass** es folgende Schritte umfasst:

i) Vorimprägnieren eines faserigen Materials mit mindestens einem nicht reaktionsfähigen thermoplastischen Polymer, insbesondere durch kontinuierliches Leiten der Fasern in einer Wirbelschicht mit trockenem Polymerpulver, einer wässrigen Dispersion aus Polymerpulver oder einer wässrigen Dispersion aus Polymerteilchen oder einer Emulsion oder wässrigen Suspension des Polymers, wobei der Schritt zum Vorimprägnieren mit mindestens thermoplastischem Polymer durchgeführt wird und das thermoplastische Polymer ein Polymer mit einer Tg ≥130°C ist, wobei das nicht reaktionsfähige thermoplastische Polymer eine zahlenmittlere Molmasse Mn des thermoplastischen Polymers von 14.000 bis 25.000 und vorzugsweise von 15.000 bis 21.000 aufweist und die Schmelzviskosität des thermoplastischen Polymers, ermittelt mittels Platte-Platte-Rheologie bei 1 Hz und 2% Verformung, bei einer Temperatur Tg + 220 °C von 150 bis 1500 Pa.s und vorzugsweise von 200 bis 750 Pa.s beträgt,
ii) Schritt zum Erwärmen ohne Halt des faserigen vorimprägnierten Materials zum Erhalten eines faserigen vorimprägnierten Materials,
iii) gegebenenfalls Schritt zum Erwärmen, der mit mindestens einem Halteteil (E) und mit mindestens einem Heizsystem durchgeführt wird, zum Erhalten eines faserigen imprägnierten Materials,
iv) gegebenenfalls Schritt zum Formen des Bündels oder der parallelen Bündel aus dem faserigen imprägnierten Material und Bringen desselben bzw. derselben auf Maß zum Erhalten eines faserigen imprägnierten Materials, das aus einem Band in Form eines dünnen Streifens besteht.

32. Verfahren nach einem der Ansprüche 21 bis 31, **dadurch gekennzeichnet, dass** eine oder mehrere Haltevorrichtung(en) (E'') in Verfahrensrichtung vor dem System vorhanden ist bzw. sind.

33. Verfahren nach einem der Ansprüche 25 bis 32, **dadurch gekennzeichnet, dass** es bei der Variante Trockenpulver mit einer Geschwindigkeit von 5 bis 30 m/min und bei der wässrigen Dispersion mit einer Geschwindigkeit von mindestens 15 m/min durchgeführt wird.

34. Verwendung eines faserigen imprägnierten Materials nach einem der Ansprüche 1 bis 20 zur Herstellung von Bändern, die für die Herstellung von dreidimensionalen Verbundteilen durch automatisches Ablegen der Bänder mit einem Roboter ausgelegt sind.

35. Verwendung eines faserigen imprägnierten Materials nach einem der Ansprüche 1 bis 20 zur Herstellung von thermoformbaren Folien.

36. Verwendung nach Anspruch 35, **dadurch gekennzeichnet, dass** das faserige imprägnierte Material in Stücke zugeschnitten wird, wobei die Stücke zur Herstellung der thermoformbaren Folie zufällig zusammengefügt oder ausgerichtet werden.

37. Verwendung von mindestens einem nicht reaktionsfähigen thermoplastischen Polymer, wobei das mindestens eine nicht reaktionsfähige thermoplastische Polymer ein amorphes oder teilkristallines thermoplastisches Polymer ist, dessen Glasübergangstemperatur derart ist, dass Tg ≥ 40°C, vor allem Tg ≥ 100°C, insbesondere ≥ 120°C beträgt, der Fasergehalt in dem faserigen imprägnierten Material von 45 bis 65 Volumen-%, vorzugsweise von 50 bis 60 Volumen-%, vor allem von 54 bis 60 Volumen-% beträgt, die zahlenmittlere Molmasse Mn des thermoplastischen Polymers von 11.000 bis 25.000 g/mol beträgt, die Schmelzviskosität des thermoplastischen Polymers, ermittelt mittels Platte-Platte-Rheologie bei 1 Hz und 2% Verformung, bei einer Temperatur Tg + 220°C, von 80 bis 1500 Pa.s beträgt, nach einem der Ansprüche 1 bis 11 und 18 bis 19 zum Imprägnieren eines faserigen Materials.

**Claims**

1. Impregnated fibrous material comprising at least one continuous-fibre fibrous material present in the form of one or more parallel rovings and at least one thermoplastic polymer matrix, **characterized in that** said at least one thermoplastic polymer is an amorphous or semicrystalline polymer having a glass transition temperature such that Tg ≥ 40°C, in particular Tg ≥ 100°C, in particular ≥ 120°C, as measured with a differential scanning calorimeter (DSC) after a second heating run according to the standard ISO 11357-2:2013 with a heating and cooling rate of 20°C/min, the content of fibres in said impregnated fibrous material being from 45% to 65% by volume, preferably from 50% to 60% by volume, especially from 54% to 60% by volume, the number-average molecular mass Mn of said thermoplastic polymer being from 11 000 to 25 000 g/mol, the melt viscosity of said thermoplastic polymer being from 80 to 1500 Pa·s, as measured by plane-plane rheology at 1 Hz and 2% deformation, at a temperature of Tg + 220°C.

2. Impregnated fibrous material according to Claim 1, **characterized in that** the polydispersity index Ip of said thermoplastic polymer is from 2 to 6, in particular from 2 to 3.5, especially from 2.5 to 3.5.

3. Impregnated fibrous material according to Claim 1 or 2, **characterized in that** said at least one thermoplastic polymer is selected from: polyaryl ether ketones (PAEKs), in particular polyether ether ketone (PEEK); polyaryl ether ketone ketones (PAEKKs), in particular polyether ketone ketone (PEKK); aromatic polyether imides (PEIs); polyaryl sulfones, in particular polyphenylene sulfones (PPSUs); polyaryl sulfides, in particular polyphenylene sulfides (PPSs), polyamides (PAs), in particular semiaromatic polyamides (polyphthalamides) optionally modified by urea units; PEBAs, polyacrylates, in particular polymethyl methacrylate (PMMA); polyolefins, polylactic acid (PLA), polyvinyl alcohol (PVA), and fluoropolymers, in particular polytetrafluoroethylene (PTFE) or polychlorotrifluoroethylene (PCTFE); and mixtures thereof, especially a mixture of PEKK and PEI, preferably from 90-10% by weight to 60-40% by weight, in particular from 90-10% by weight to 70-30% by weight.

4. Impregnated fibrous material according to Claims 1 to 3, **characterized in that** the number-average molecular mass Mn of said thermoplastic polymer is from 14 000 to 25 000 and preferably from 15 000 to 21 000 and the melt viscosity of said thermoplastic polymer is from 150 to 1500 Pa·s and preferably from 200 to 750 Pa·s at a temperature of Tg + 220°C and said thermoplastic polymer is a polymer of Tg ≥ 130°C.

5. Impregnated fibrous material according to Claim 4, **characterized in that** said at least one thermoplastic polymer is a polyamide, in particular a thermally stabilized polyamide.

6. Impregnated fibrous material according to Claim 5, **characterized in that** said polyamide is selected from semiaromatic polyamides.

7. Fibrous material according to Claim 6, **characterized in that** said semiaromatic polyamide is modified by urea units and selected from a semiaromatic polyamide of formula X/YAr, especially a semiaromatic polyamide of formula A/XT wherein A is selected from a structural element obtained from an amino acid, a structural element obtained from a lactam and a structural element corresponding to the formula (Ca-diamine)-(Cb-diacid), with a representing the number of carbon atoms in the diamine and b representing the number of carbon atoms in the diacid, a and b each being between 4 and 36, advantageously between 9 and 18, the (Ca-diamine) structural element being selected from linear or branched aliphatic diamines, cycloaliphatic diamines and alkylaromatic diamines and the (Cb-diacid) structural element being selected from linear or branched aliphatic diacids, cycloaliphatic diacids and aromatic diacids;

X.T denotes a structural element obtained from the polycondensation of a Cx-diamine and terephthalic acid, with x representing the number of carbon atoms in the Cx-diamine, x being between 6 and 36, advantageously between 9 and 18, especially a polyamide of formula A/6T, A/9T, A/10T or A/11T, A being as defined above, in particular a polyamide PA 6/6T, a PA 66/6T, a PA 6I/ 6T, a PA MXDT/6T, a PA MPMDT/6T, a PA PA11/10T, a PA 11/6T/10T, a PA MXDT/10T, a PA MPMDT/10T, a PA BACT/10T, a PA BACT/6T, a PA 11/BACT, a PA BACT/10T/6T, a PA 11/BACT/6T, PA 11/MPMDT/6T, a PA 11/BACT/10T, a PA 11/MXDT/10T or a PA 11/MXDT/6T.

8.  Impregnated fibrous material according to Claim 6 or 7, **characterized in that** said semiaromatic polyamide is selected from PA MXDT/6T, PA MPMDT/6T, PA 11/BACT, PA 11/6T/10T, PA MXDT/10T, PA MPMDT/10T, PA BACT/10T, PA BACT/6T, PA BACT/10T/6T, PA 11/BACT/6T, PA 11/MPMDT/6T, PA 11/BACT/10T, PA 11/MXDT/10T and PA 11/MXDT/6T.

9.  Impregnated fibrous material according to Claims 1 to 3, **characterized in that** the number-average molecular mass Mn of said thermoplastic polymer is from 11 000 to 20 000 g/mol and preferably from 12 000 to 18 000, the melt viscosity of said thermoplastic polymer is from 80 to 650 Pa·s and preferably from 100 to 450 Pa·s at a temperature of Tg + 220°C and said thermoplastic polymer is a polyamide of Tg < 130°C.

10. Impregnated fibrous material according to Claim 9, **characterized in that** said polyamide of Tg < 130°C is selected from aliphatic polyamides, cycloaliphatic polyamides and semiaromatic polyamides of Tg less than 130°C, in particular aliphatic polyamides and cycloaliphatic polyamides.

11. Impregnated fibrous material according to Claim 10, **characterized in that** said aliphatic polyamide is selected from polyamide 6 (PA-6), polyamide 11 (PA-11), polyamide 12 (PA-12), polyamide 66 (PA-66), polyamide 46 (PA-46), polyamide 610 (PA-610), polyamide 612 (PA-612), polyamide 1010 (PA-1010), polyamide 1012 (PA-1012), polyamide 11/1010, polyamide 12/1010 or a mixture thereof or a copolyamide thereof, and block copolymers, especially polyamide/polyether (PEBA), and semiaromatic polyamides are selected from MXD10, MXD6, PA 6/6T, PA 66/6T, PA 6I/6T, MPMDT/10T, 11/MPMDT/10T, MPMDT/6T, PA BACT/10T, PA 11/BACT/10T, MXDT/10 and PA 11/MXDT/10T.

12. Impregnated fibrous material according to any of Claims 1 to 11, **characterized in that** the number of fibres in said fibrous material for carbon fibres is greater than or equal to 3K, in particular greater than or equal to 6K, especially greater than or equal to 12K, in particular selected from 12K, 24K, 48K, 50K and 400K, especially 12K, 24K, 48K and 50K, or the grammage for the glass fibre is greater than or equal to 1200 tex, especially greater than or equal to 2400 tex, or greater than or equal to 4800 tex.

13. Impregnated fibrous material according to any of Claims 1 to 12, **characterized in that** the fibres of the fibrous material are not sized.

14. Impregnated fibrous material according to any of Claims 1 to 13, **characterized in that** the content of fibres by volume is constant in at least 70% of the volume of the impregnated fibrous material, especially in at least 80% of the volume of the impregnated fibrous material, in particular in at least 90% of the volume of the impregnated fibrous material, more particularly in at least 95% of the volume of the impregnated fibrous material.

15. Impregnated fibrous material according to any of Claims 1 to 14, **characterized in that** the degree of porosity in said impregnated fibrous material is less than 10%, especially less than 5%, in particular less than 2%, said degree of porosity corresponds to the degree of closed porosity and is determined as being the relative difference between the theoretical density and the experimental density of said impregnated fibrous material as described in the examples section of the description.

16. Impregnated fibrous material according to any of Claims 1 to 15, **characterized in that** said impregnated fibrous material comprises a single layer.

17. Impregnated fibrous material according to any of Claims 1 to 16, **characterized in that** said fibrous material comprises continuous fibres selected from carbon fibres, glass fibres, silicon carbide fibres, basalt fibres, silica fibres, natural fibres, in particular flax or hemp fibres, lignin fibres, bamboo fibres, sisal fibres, silk fibres, or cellulose fibres, in particular viscose fibres, or amorphous thermoplastic fibres having a glass transition temperature Tg above the Tg of said polymer or of said mixture of polymers when the latter is amorphous or above the Tm of said polymer or of said mixture of polymers when the latter is semicrystalline, or semicrystalline thermoplastic fibres having a melting temperature Tm above the Tg of said polymer or of said mixture of polymers when the latter is amorphous or above the Tm of said polymer or of said mixture of polymers when the latter is semicrystalline, or a mixture of two or more of said fibres, preferably a mixture of carbon, glass or silicon carbide fibres, in particular carbon fibres.

18. Impregnated fibrous material according to any of Claims 1 to 17, **characterized in that** said thermoplastic polymer further comprises carbon-based fillers, in particular carbon black or carbon-based nanofillers, preferably selected from graphenes, carbon nanotubes, carbon nanofibrils or mixtures thereof.

19. Impregnated fibrous material according to any of Claims 1 to 18, **characterized in that** said thermoplastic prepolymer further comprises liquid crystal polymers or cyclized poly(butylene terephthalate), or mixtures containing said liquid crystal polymers or said cyclized poly(butylene terephthalate) as additives.

20. Impregnated fibrous material according to any of Claims 1 to 19, **characterized in that** said impregnated fibrous material is non-flexible, i.e. that it is unable to assume a complex shape at room temperature and can do so only above the Tm of the resin.

21. Process for preparing an impregnated fibrous material as defined in any of Claims 1 to 20, **characterized in that** it comprises a preimpregnation step or a step of impregnating said fibrous material with at least thermoplastic polymer that is an amorphous or semicrystalline polymer having a glass transition temperature such that $Tg \geq 40°C$, especially $Tg \geq 100°C$, in particular $\geq 120°C$, the content of fibres in said impregnated fibrous material being from 45% to 65% by volume, preferably from 50% to 60% by volume, especially from 54% to 60% by volume, the number-average molecular mass Mn of said thermoplastic polymer being from 11 000 to 25 000 g/mol, the melt viscosity of said thermoplastic polymer being from 80 to 1500 Pa·s, as measured by plane-plane rheology at 1 Hz and 2% deformation, at a temperature of Tg + 220°C.

22. Process for preparing an impregnated fibrous material according to Claim 21, **characterized in that** it comprises a step of impregnating said fibrous material with at least thermoplastic polymer, the number-average molecular mass Mn of said thermoplastic polymer being from 11 000 to 20 000 g/mol and preferably from 12 000 to 18 000, the melt viscosity of said thermoplastic polymer is from 80 to 650 Pa·s and preferably from 100 to 450 Pa·s at a temperature of Tg + 220°C, and said thermoplastic polymer being a polyamide of Tg < 130°C.

23. Process according to Claim 22, **characterized in that** said impregnation step is carried out by the molten route, especially at high speed, in particular at a speed of at least 1 to 10 m/min for the molten route, in particular of at least 2 m/min.

24. Process according to Claim 22 or 23, **characterized in that** it comprises the following steps:

i) impregnating a fibrous material with at least one non-reactive thermoplastic polymer by the molten route, especially by pultrusion, by crosshead extrusion of molten polymer, to obtain an impregnated fibrous material, said preimpregnation step being carried out with at least thermoplastic polymer, the number-average molecular mass Mn of said thermoplastic polymer being from 11 000 to 20 000 g/mol and preferably from 12 000 to 18 000, the melt viscosity of said thermoplastic polymer is from 80 to 650 Pa·s and preferably from 100 to 450 Pa·s at a temperature of Tg + 220°C, and said thermoplastic polymer being a polyamide of Tg < 130°C,
i) optionally a step of shaping and calibrating said impregnated fibrous material to obtain an impregnated fibrous material consisting of a ribbon in the form of a thin strip having a thickness of from 0.2 to 5 mm and preferably 0.2 to 1.3 mm thick.

25. Process for preparing an impregnated fibrous material according to Claim 21, **characterized in that** it comprises a step of preimpregnating said fibrous material present in the form of one or more parallel rovings with at least one non-reactive thermoplastic polymer, the number-average molecular mass Mn of said thermoplastic polymer is from 14 000 to 25 000 and preferably from 15 000 to 21 000, and the melt viscosity of said thermoplastic polymer is from 150 to 1500 Pa·s and preferably from 200 to 750 Pa·s at a temperature of Tg + 220°C, and said thermoplastic polymer is a polymer of $Tg \geq 130°C$.

26. Process according to Claim 25, **characterized in that** said preimpregnation is carried out with a system selected from a fluidized bed, spraying with a spray gun, continuous passage of the fibres through an aqueous dispersion of powder of said non-reactive thermoplastic polymer or aqueous dispersion of particles of said thermoplastic polymer or aqueous emulsion or suspension of said non-reactive thermoplastic polymer, especially at high speed.

27. Process according to Claim 25 or 26, **characterized in that** it comprises at least one step of tensioning-free heating of said preimpregnated fibrous material.

28. Process according to Claim 25 or 26, **characterized in that** it comprises at least one step of heating carried out by means of at least one tension device (E) and at least one heating system, said roving or said rovings being in contact with part or all of the surface of said at least one tension device (E) and running partially or completely over the surface of said at least one tension device (E) in the heating system.

29. Process according to either of Claims 27 and 28, **characterized in that** the heating system is selected from an infrared lamp, a UV lamp, convection heating, microwave heating, laser heating and high-frequency (HF) heating.

30. Process according to any of Claims 25 to 29, **characterized in that** it comprises the following steps:

i) preimpregnating a fibrous material with at least one non-reactive thermoplastic polymer by means of a fluidized bed in a tank optionally equipped with at least one tension device (E'), by spraying with a nozzle or spray gun by the dry route into a tank optionally equipped with at least one tension device (E') to obtain a preimpregnated fibrous material, said preimpregnation step being carried out with at least one non-reactive thermoplastic polymer, the number-average molecular mass Mn of said thermoplastic polymer is from 14 000 to 25 000 and preferably from 15 000 to 21 000 and the melt viscosity of said thermoplastic polymer is from 150 to 1500 Pa·s and preferably from 200 to 750 Pa·s at a temperature of Tg + 220°C and said thermoplastic polymer is a polymer of Tg $\geq$ 130°C,
ii) a step of tensioning-free heating of said preimpregnated fibrous material to obtain a preimpregnated fibrous material,
iii) a step of heating carried out by means of at least one tension device (E) and at least one heating system, as defined in Claim 28 or 29, to obtain an impregnated fibrous material,
iv) optionally a step of shaping and calibrating the roving or said parallel rovings of said impregnated fibrous material to obtain an impregnated fibrous material consisting of a ribbon in the form of a thin strip.

31. Process according to any of Claims 25 to 29, **characterized in that** it comprises the following steps:

(i) preimpregnating a fibrous material with at least one non-reactive thermoplastic polymer, especially by continuous passage of the fibres through a fluid bed of dry polymer powder, an aqueous dispersion of polymer powder or aqueous dispersion of polymer particles or aqueous polymer emulsion or suspension, said preimpregnation step being carried out by at least thermoplastic polymer and said thermoplastic polymer is a polymer having a Tg $\geq$ 130°C, said non-reactive thermoplastic polymer having a number-average molecular mass Mn of said thermoplastic polymer from 14 000 to 25 000 and preferably from 15 000 to 21 000 and the melt viscosity of said thermoplastic polymer is from 150 to 1500 Pa·s and preferably from 200 to 750 Pa·s, as measured by plane-plane rheology at 1 Hz and 2% deformation, at a temperature of Tg + 220°C,
ii) a step of tensioning-free heating of said preimpregnated fibrous material to obtain an impregnated fibrous material,
iii) optionally a step of heating carried out by means of at least one tension device (E) and at least one heating system to obtain an impregnated fibrous material,
iv) optionally a step of shaping and calibrating the roving or said parallel rovings of said impregnated fibrous material to obtain an impregnated fibrous material consisting of a ribbon in the form of a thin strip.

32. Process according to any of Claims 21 to 31, **characterized in that** one or more tension device(s) (E") is/are present upstream of said system.

33. Process according to any of Claims 25 to 32, **characterized in that** it is carried out for the dry powder route at a speed of from 5 to 30 m/min and for the aqueous dispersion at a speed of at least 15 m/min.

34. Use of an impregnated fibrous material, as defined in any of Claims 1 to 20, for preparing ribbons suitable for the production of three-dimensional composite parts, by automated layup of said ribbons using a robot.

35. Use of an impregnated fibrous material, as defined in any of Claims 1 to 20, for preparing thermoformable sheets.

36. Use according to Claim 35, **characterized in that** the impregnated fibrous material is precut into pieces, said pieces being randomly associated or oriented for preparing the thermoformable sheet.

37. Use of at least one non-reactive thermoplastic polymer, said at least one non-reactive thermoplastic polymer being an amorphous or semicrystalline thermoplastic polymer having a glass transition temperature such that Tg ≥ 40°C, especially Tg ≥ 100°C, in particular ≥ 120°C, the content of fibres in said impregnated fibrous material being from 45% to 65% by volume, preferably from 50% to 60% by volume, especially from 54% to 60% by volume, the number-average molecular mass Mn of said thermoplastic polymer being from 11 000 to 25 000 g/mol, the melt viscosity of said thermoplastic polymer being from 80 to 1500 Pa·s, as measured by plane-plane rheology at 1 Hz and 2% deformation, at a temperature of Tg + 220°C, as defined in any of Claims 1 to 11 and 18 to 19, for impregnating a fibrous material.

[Fig. 1]

[Fig. 2]

[Fig. 3]

Composite AT4

[Fig. 4]

Composite AT2

[Fig. 5]

Plaque PAHTG 1332 J-H

[Fig. 6]

Plaque PAHTG 1332 J-H

**EP 3 898 786 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2012066241 A2
- EP 1505099 A
- WO 2015121583 A
- WO 2018115736 A
- WO 2018115737 A
- US 20140005331 A1